# EUROPEAN PATENT APPLICATION

(11) **EP 2 647 653 A1**
(43) Date of publication of application: **09.10.2013**
(21) Application number: 11845886.8
(22) Date of filing: 25.11.2011
(51) Int. Cl.: C08F 299/00, C08F 8/00, C08F 20/10, C08F 290/04

(54) **ACTIVE ENERGY RAY-CURABLE COMPOSITION FOR OPTICAL MATERIAL, CURED PRODUCT, AND PRODUCTION METHOD**

(30) Priority: 02.12.2010 JP 2010269655
(71) Applicant: Kaneka Corporation, Osaka-shi, Osaka 530-8288 (JP)
(72) Inventor: ICHIRYU Yoshikatsu, Settsu-shi Osaka 566-0072 (JP); KOTANI Jun, Settsu-shi Osaka 566-0072 (JP)
(74) Representative: Vossius & Partner
(86) International application number: PCT/JP2011/077201
(87) International publication number: WO 2012/073827

(57) **Abstract**

The present invention provides an active energy ray-curable composition for an optical material, which is excellent in terms of low viscosity, storage stability, low foaming properties, low-temperature curing, less warpage, depth curability, heat-resistant and light-resistant transparency, rubber properties, crack resistance, resistance to moisture penetration, and designability; a cured product thereof; and a method for producing the same. The present invention relates to an active energy ray-curable composition for an optical material, including: (A) a vinyl polymer that has per molecule at least one (meth) acryloyl group represented by formula (1), is produced by living radical polymerization, and has a color difference ΔE* of 10 or less; (B) a photo-radical polymerization initiator; and (C) at least one antioxidant selected from the group consisting of hindered phenol antioxidants, hindered amine antioxidants, and phosphorus antioxidants, the formula (1) being

-OC(O)C(R^{a})=CH₂ (1)

wherein R^{a} represents a hydrogen atom or a C1-20 organic group.

## Description

### TECHNICAL FIELD

The present invention relates to an active energy ray-curable composition for an optical material, a cured product thereof, and a production method thereof.

### BACKGROUND ART

For optical materials used in LEDs, solar cells, flat panel displays and the like, materials having high transparency, heat-resistant transparency, and light-resistant transparency are used. Such materials are also required to have sufficient properties such as shock resistance and resistance to moisture penetration to withstand the usage environment so as to protect elements and fine wirings. Regarding the production process, they are required to have low viscosity which allows high productivity and to have less cure shrinkage which avoids warpage of a substrate.

As optical materials for LEDs, widely used are hard transparent epoxy resins containing acid anhydride curing agents, soft silicone resins mainly containing methyl polysiloxane, hard silicone resins mainly containing phenyl polysiloxane, and the like (Non Patent Literature 1). These resins are thermosetting resins and require a cure time of several tens of minutes to several hours at 100°C, which is a problem in terms of productivity. In addition, hard epoxy resins and hard silicone resins shrink largely on curing, which imposes constraints on the production process. Soft silicone resins have the problems of poor resistance to moisture penetration and contamination of the surroundings with low-molecular siloxane.

LED lightings, of which market expansion is significant, include modules prepared by mounting LED packages arranged on a substrate. LED traffic lights on the roads include bullet LED packages arranged thereon. Such a production method, in which LED packages are arranged to prepare a module, has a problem with productivity. To solve the problem, a method in which LED elements are arranged on a substrate and then collectively encapsulated with an optical material to prepare a module may be considered.

The present inventors have reported on polymers whose backbone is a vinyl polymer obtained by living radical polymerization and is terminated by a (meth)acryloyl group (Patent Literatures 1 to 3). Cured products formed from these polymers are excellent in rubber properties, heat resistance, and the like but have a yellow color which is caused by heat. Accordingly, the polymers are often not applicable for optical materials requiring high transparency.

### CITATION LIST

### PATENT LITERATURE

Patent Literature 1: JP-A 2000-72816
Patent Literature 2: JP-A 2002-69121
Patent Literature 3: JP-A 2007-77182

### NON PATENT LITERATURE

Non Patent Literature 1: Encapsulation Technologies for High Performance Device and State-of-the-art Materials, August 2009, CMC Publishing Co., LTD.

### SUMMARY OF INVENTION

### TECHNICAL PROBLEM

The present invention aims to provide an active energy ray-curable composition for an optical material, which is excellent in terms of low viscosity, storage stability, low foaming properties, low-temperature curing, less warpage, depth curability, heat-resistant and light-resistant transparency, rubber properties, crack resistance, resistance to moisture penetration, and designability; a cured product thereof; and a method for producing the same.

### SOLUTION TO PROBLEM

In this context, the present inventors have thought that the use of a (meth)acryloyl group-terminated acrylic polymer for an optical material makes it possible to improve the productivity through active energy ray curing which allows curing in several tens of seconds at low temperatures, to suppress the cure shrinkage with the use of a polymer obtained by living radical polymerization, and to improve the resistance to moisture penetration with the use of an acrylate monomer having resistance to moisture penetration, which leads to the production of a novel optical material. In addition, the present inventors have thought that such an optical material is most suited for, for example, a method in which LED elements are arranged on a substrate and then collectively encapsulated with an optical material to prepare a module. However, (meth)acryloyl group-terminated acrylic polymers obtained by conventional living radical polymerization methods are turned yellow, which is caused by heat. Accordingly, such polymers are not considered to be applicable for optical materials requiring high transparency.

The present inventors have presumed that, if coloring of a (meth) acryloyl group-terminated acrylic polymer obtained by living radical polymerization is reduced, then the acrylic polymer is applicable for optical materials requiring high transparency. As a result of intensive studies based on this presumption, the present inventors have found that the purification using hydrogen peroxide reduces coloring so that the resulting cured product has high transparency and even excellent heat-resistant and light-resistant transparency, thereby completing the present invention.

Specifically, the present invention relates to an active energy ray-curable composition for an optical material, including:
(A) a vinyl polymer that has per molecule at least one (meth)acryloyl group represented by formula (1) below, is produced by living radical polymerization, and has a color difference ΔE* of 10 or less;
(B) a photo-radical polymerization initiator; and
(C) at least one antioxidant selected from the group consisting of hindered phenol antioxidants, hindered amine antioxidants, and phosphorus antioxidants,
   the formula (1) being

   -OC(O)C(R^{a})=CH₂ (1)

   wherein R^{a} represents a hydrogen atom or a C1-20 organic group.

The (meth)acryloyl group in the component (A) is preferably present at a molecular terminal.

The vinyl polymer (A) preferably mainly includes a polymer of a (meth)acrylate monomer.

The vinyl polymer (A) preferably mainly includes a polymer of an acrylate monomer.

The vinyl polymer (A) is preferably produced by atom transfer radical polymerization.

The vinyl polymer (A) preferably has a number average molecular weight of 3,000 to 100,000.

The vinyl polymer (A) preferably has a ratio of weight average molecular weight to number average molecular weight, as determined by gel permeation chromatography, of less than 1.8.

The active energy ray-curable composition for an optical material preferably includes, in addition to the components (A), (B) and (C),
(D) a (meth) acrylate monomer represented by the following formula (4):

R^{b}-OC(O)C(R^{a})=CH₂ (4)

wherein R^{a} represents a hydrogen atom or a C1-20 organic group, and R^{b} represents a C6-20 organic group.

The active energy ray-curable composition for an optical material preferably includes 0.001 to 10 parts by weight of the component (B) and 0.01 to 5 parts by weight of the component (C), each per 100 parts by weight in total of the component (A) and the component (D).

The vinyl polymer (A) is preferably treated with aqueous hydrogen peroxide.

The antioxidant (C) is preferably a combination of a hindered phenol antioxidant and a phosphorus antioxidant, a combination of a hindered amine antioxidant and a phosphorus antioxidant, or a combination of a hindered phenol antioxidant, a hindered amine antioxidant and a phosphorus antioxidant.

The present invention also relates to a cured product for an optical material, which is formed from the active energy ray-curable composition for an optical material.

The cured product for an optical material preferably has a glass transition temperature of 0°C or lower.

The cured product for an optical material preferably has a storage elastic modulus at 23°C of 10 MPa or less.

The active energy ray-curable composition for an optical material is preferably for use in an encapsulant for LEDs, for solar cells, or for flat panel displays.

The present invention also relates to a method for producing an LED module, a solar cell module, or a flat panel display module, the method including a step of collective encapsulation with the active energy ray-curable composition for an optical material.

### ADVANTAGEOUS EFFECTS OF INVENTION

The present invention provides an active energy ray-curable composition for an optical material and a cured product for an optical material which are excellent in terms of active energy ray curability, low viscosity, storage stability, low foaming properties, low-temperature curing, less warpage, depth curability, heat-resistant and light-resistant transparency, rubber properties, crack resistance, resistance to moisture penetration, and designability.

### DESCRIPTION OF EMBODIMENTS

The following will specifically describe the active energy ray-curable composition for an optical material of the present invention.

### «Component (A) »

The component (A) refers to a vinyl polymer which has per molecule at least one (meth)acryloyl group represented by the following formula (1):

-OC(O)C(R^{a})=CH₂ (1)

wherein R^{a} represents a hydrogen atom or a C1-20 organic group, which is produced by living radical polymerization, and which has a color difference ΔE* of 10 or less.

In the production of the component (A), the average number of (meth)acryloyl groups introduced in the vinyl polymer may be different from the predetermined value because some components are unreacted or some side reactions occur. The average number of (meth) acryloyl groups introduced per molecule of the vinyl polymer is preferably 0.8 or more, more preferably 0.9 or more, and still more preferably 1.0 or more. With the average number of less than 0.8, the resulting cured product may contain a larger amount of unreacted components and thereby have strong tackiness, and the cured product may also show a reduction in heat-resistant transparency, light-resistant transparency, and strength. The upper limit of the average number of (meth) acryloyl groups introduced in the vinyl polymer is preferably 3. 0 or less, more preferably 2. 6 or less, and still more preferably 2.2 or less. With the average number of more than 3.0, the crosslinking points of the cured product may increase so that the cured product can have lowered elongation and greater cure shrinkage and can be likely to crack.

The (meth) acryloyl group introduced in the vinyl polymer is preferably present at a molecular terminal. In the case where the (meth) acryloyl group is present in an irregular manner in a side chain of the vinyl polymer, the cured product has poor elongation properties because the distances between crosslinking points cannot be controlled. The (meth)acryloyl group is preferably present near the molecular terminal, and more preferably only present at the molecular terminal because then the distances between crosslinking points can be increased and the elongation properties of the cured product can be improved.

The R^{a} in the (meth) acryloyl group represents a hydrogen atom or a C1-20 organic group, and is preferably a hydrogen atom or a C1-20 hydrocarbon group. Examples of the organic group are as follows.

Examples of the C1-20 organic group include C1-20 alkyl groups, C6-20 aryl groups, C7-20 aralkyl groups, and nitrile groups. Each of these may contain a substituent such as a hydroxy group. Examples of the C1-20 alkyl groups include methyl, ethyl, propyl, butyl, pentyl, hexyl, octyl, and decyl groups. Examples of the C6-20 aryl groups include phenyl and naphthyl groups. Examples of the C7-20 aralkyl groups include benzyl and phenylethyl groups.

Specific preferred examples of R^{a} include -H, -CH₃, -CH₂CH₃, - (CH₂)ₙCH₃ (in which n represents an integer of 2 to 19), -C₆H₅, -CH₂OH, and -CN. Preferred among these are -H and -CH₃.

The vinyl monomer forming the backbone of the component (A) is not particularly limited and various vinyl monomers may be used. Examples thereof include: (meth)acrylic acid; (meth)acrylate monomers such as methyl (meth)acrylate, ethyl (meth)acrylate, n-propyl (meth)acrylate, isopropyl (meth)acrylate, n-butyl (meth)acrylate, isobutyl (meth)acrylate, tert-butyl (meth)acrylate, n-pentyl (meth)acrylate, n-hexyl (meth)acrylate, cyclohexyl (meth)acrylate, n-heptyl (meth)acrylate, n-octyl (meth)acrylate, isooctyl (meth)acrylate, 2-ethylhexyl (meth)acrylate, nonyl (meth)acrylate, isononyl (meth)acrylate, decyl (meth)acrylate, isodecyl (meth)acrylate, isobornyl (meth)acrylate, dicyclopentanyl (meth)acrylate, dodecyl (meth)acrylate, phenyl (meth)acrylate, toluyl (meth)acrylate, benzyl (meth)acrylate, 2-methoxyethyl (meth)acrylate, 3-methoxybutyl (meth)acrylate, 2-hydroxyethyl (meth)acrylate, 2-hydroxypropyl (meth)acrylate, stearyl (meth)acrylate, isostearyl (meth)acrylate, glycidyl (meth)acrylate, 2-aminoethyl (meth)acrylate, γ-(methacryloyloxypropyl)trimethoxysilane, ethylene oxide adducts of (meth)acrylic acid, trifluoromethylmethyl (meth)acrylate, 2-trifluoromethylethyl (meth)acrylate, 2-perfluoroethylethyl (meth)acrylate, 2-perfluoroethyl-2-perfluorobutylethyl (meth)acrylate, 2-perfluoroethyl (meth)acrylate, perfluoromethyl (meth)acrylate, diperfluoromethylmethyl (meth)acrylate, 2-perfluoromethyl-2-perfluoroethylethyl (meth)acrylate, 2-perfluorohexylethyl (meth)acrylate, 2-perfluorodecylethyl (meth)acrylate, and 2-perfluorohexadecylethyl (meth)acrylate; aromatic vinyl monomers such as styrene, vinyltoluene, α-methylstyrene, chlorostyrene, and styrenesulfonic acid and its salts; fluorine-containing vinyl monomers such as perfluoroethylene, perfluoropropylene, and vinylidene fluoride; silicon-containing vinyl monomers such as vinyltrimethoxysilane and vinyltriethoxysilane; maleic anhydride, maleic acid, and monoalkyl or dialkyl esters of maleic acid; fumaric acid and monoalkyl or dialkyl esters of fumaric acid; maleimide monomers such as maleimide, methylmaleimide, ethylmaleimide, propylmaleimide, butylmaleimide, hexylmaleimide, octylmaleimide, dodecylmaleimide, stearylmaleimide, phenylmaleimide, and cyclohexylmaleimide; nitrile group-containing vinyl monomers such as acrylonitrile and methacrylonitrile; amido group-containing vinyl monomers such as acrylamide and methacrylamide; vinyl esters such as vinyl acetate, vinyl propionate, vinyl pivalate, vinyl benzoate, and vinyl cinnamate; alkenes such as ethylene and propylene; conjugated dienes such as butadiene and isoprene; and vinyl chloride, vinylidene chloride, allyl chloride, and allyl alcohol. Each of these may be used alone, or a plurality of these may be used in combination.

Among the above vinyl monomers, vinyl monomers having no aromatic group are preferred because vinyl monomers having aromatic groups are likely to be oxidatively colored in the presence of light.

(Meth)acrylate monomers, more preferably acrylate monomers, are preferred because the resulting cured product has a low glass transition temperature and excellent elongation properties. Specific preferred examples of the acrylate monomers include ethyl acrylate, 2-methoxyethyl acrylate, butyl acrylate, and 2-ethylhexyl acrylate because they are readily available and easy to purify.

In terms of heat resistance and resistance to moisture penetration, the vinyl monomer forming the backbone is particularly preferably butyl acrylate or 2-ethylhexyl acrylate.

In the present invention, these preferred monomers may be copolymerized with other monomers mentioned above. In such a case, the amount of these preferred monomers incorporated is preferably 40% by weight or more. It should be noted that the terms "(meth)acrylate" or similar terms as used herein refers to "acrylate and/or methacrylate".

One kind of component (A) may be used alone or two or more kinds of component (A) may be used in admixture. For example, a vinyl polymer having (meth) acryloyl groups at both terminals and a vinyl polymer having a (meth)acryloyl group at one terminal may be used in combination.

The component (A) preferably mainly (i.e. as a main constituent) includes a polymer of a (meth)acrylate monomer, more preferably a polymer of an acrylate monomer. The main constituent refers to the constituent included in the greatest proportion of the entire component (A), and constitutes 40% by weight or more of the entire component (A). The amount of the (meth) acrylate monomer incorporated is preferably 60% by weight or more, and more preferably 80% by weight or more.

The molecular weight distribution [ratio of weight average molecular weight (Mw) to number average molecular weight (Mn) as determined by gel permeation chromatography (GPC)] of the component (A) is not particularly limited. Since a narrower molecular weight distribution leads to better elongation properties of the cured product, the molecular weight distribution is preferably less than 1.8, more preferably 1.5 or less, and still more preferably 1.3 or less. In GPC measurement, in general, a chloroform or tetrahydrofuran mobile phase and a polystyrene gel column are used and the values of molecular weight are obtained as polystyrene-equivalent values.

The number average molecular weight of the vinyl polymer (A) in the present invention is not particularly limited, and is preferably 3, 000 to 100, 000, more preferably 5, 000 to 80, 000, and still more preferably 8, 000 to 50, 000, as determined by GPC. With a number average molecular weight of less than 3,000, the properties (elongation properties) inherent to the vinyl polymer (A) is less likely to be exhibited. With a number average molecular weight of more than 100, 000, the polymer tends to be highly viscous and therefore have poor workability.

### <Synthesis of vinyl polymer (A)>

The vinyl polymer (A) used in the present invention is produced by living radical polymerization. Atom transfer radical polymerization is particularly preferred in terms of availability of raw materials and easiness of introduction of functional groups at the polymer terminal. The living radical polymerization and atom transfer radical polymerization are known polymerization methods. For these polymerization methods, for example, we refer to JP-A 2005-232419, JP-A 2006-291073, and the like.

The atom transfer radical polymerization, which is a preferred method for synthesis of the vinyl polymer (A) in the present invention, is briefly described below.
In the atom transfer radical polymerization, for example, an organohalide, particularly containing a highly reactive carbon-halogen bond (e.g., a carbonyl compound having a halogen at α position, a compound having a halogen at the benzylic position), or a sulfonyl halide compound is preferably used as the initiator. Specific examples thereof include compounds disclosed in the paragraphs [0040] to [0064] in JP-A 2005-232419.

In order to obtain a vinyl polymer having at least two functional groups per molecule, an organohalide or a sulfonyl halide compound which has at least two initiating points is preferably used as the initiator. Specific examples thereof include:

**o,m,p-X-CH₂-C₆H₄-CH₂-X,**

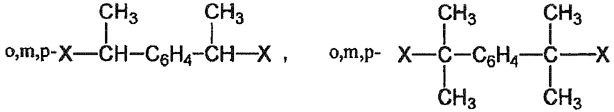

**(wherein C₆H₄ represents a phenylene group and**
**X represents chlorine, bromine, or iodine) ;** 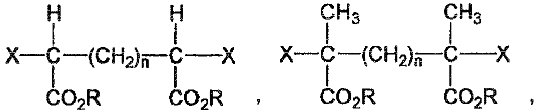 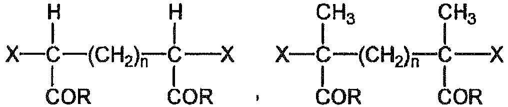 **(wherein R represents a C1-20 alkyl, aryl, or aralkyl group,**
**n represents an integer of 0 to 20, and X represents chlorine, bromine, or iodine) ;** 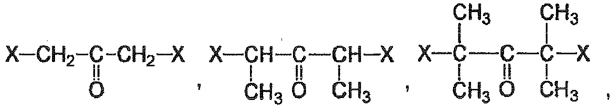 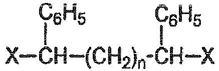 **(wherein X represents chlorine, bromine, or iodine and**
**n represents an integer of 0 to 20) ;**

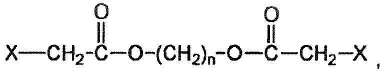

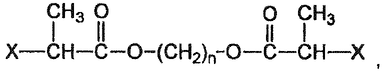

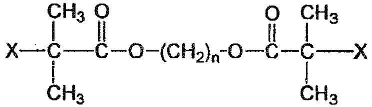

**(wherein n represents an integer of 1 to 20 and**
**X represents chlorine, bromine, or iodine) ;** 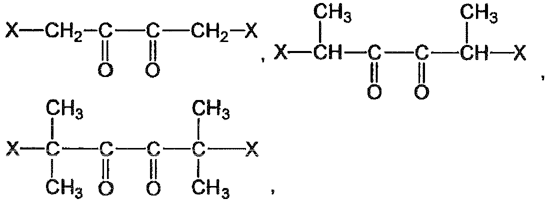 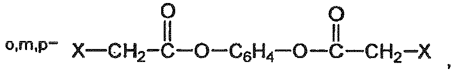 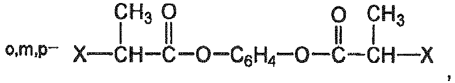 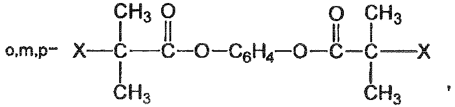 **o,m,p- X-SO₂-C₆H₄-SO₂-X**
**(wherein X represents chlorine, bromine, or iodine) ;**

and the like.

The vinyl monomer used in the atom transfer radical polymerization is not particularly limited, and any of the above-mentioned vinyl monomers can be suitably used.

A transition metal complex used as the polymerization catalyst is not particularly limited. Preferred examples thereof include metal complexes containing as the central metal an element of the 7th, 8th, 9th, 10th or 11th group of the periodic table, more preferably transition metal complexes containing as the central metal zerovalent copper, monovalent copper, divalent ruthenium, divalent iron, or divalent nickel, and especially preferably copper complexes. Specific examples of monovalent copper compounds that can be used to form the copper complex include cuprous chloride, cuprous bromide, cuprous iodide, cuprous cyanide, cuprous oxide, and cuprous perchlorate. When a copper compound is used, a ligand such as 2, 2' -bipyridyl or derivatives thereof, 1, 10-phenanthroline or derivatives thereof, and polyamines (e.g., tetramethylethylenediamine, pentamethyldiethylenetriamine, hexamethyl tris(2-aminoethyl)amine) is added for the purpose of enhancing the catalytic activity.

The polymerization reaction may be carried out without using any solvent, and may be carried out in various solvents. The type of solvent is not particularly limited, and those disclosed in the paragraph [0067] in JP-A 2005-232419 may be mentioned. Each of these may be used alone, or two or more of these may be used in combination. Further, the polymerization may be carried out in an emulsion system or a system in which a medium of supercritical fluid CO₂ is used.

The polymerization temperature is not limited. The polymerization can be carried out in a temperature range of 0 to 200°C, preferably in a temperature range of ambient temperature to 150°C.

When the vinyl polymer (A) obtained by the above synthesis method is colored, the vinyl polymer (A) is preferably treated with an oxidant.

The oxidant is not particularly limited, and those disclosed in, for example, the paragraph [0074] of JP-A 2002-69121 may be used. Aqueous hydrogen peroxide is preferred as the oxidant because it is readily available, and is degraded to oxygen and water by heating so that it is less likely to remain in and affect the vinyl polymer (A).

The treatment with an oxidant may be conducted by any method. A preferred method includes adding an oxidant to the vinyl polymer (A), stirring the mixture under heating, and then removing the solvent and the like under reduced pressure. In the case where hydrogen peroxide is used as the oxidant, an exemplary method may be used which includes mixing aqueous hydrogen peroxide having a concentration of 1 to 60% by weight and the vinyl polymer (A), stirring the mixture in the air at 70 to 150°C for 30 to 300 minutes, and then removing water under reduced pressure.

The vinyl polymer (A) has a color difference ΔE* of 10 or less, more preferably 7 or less, and still more preferably 5 or less. If the color difference ΔE* exceeds 10, the active energy ray curability including as depth curability is lowered.

The terms "color difference ΔE*" used herein refers to ΔE*_{ab} defined in JIS Z8730. The color difference may be determined using a spectrocolorimeter or the like. For example, the spectrocolorimeter SE2000 manufactured by NIPPON DENSHOKU INDUSTRIES CO., LTD. may be used.

### <Method for introducing (meth)acryloyl group>

The method for introducing a (meth)acryloyl group to a polymer may be a known method. Examples thereof include methods disclosed in the paragraphs [0080] to [0091] of JP-A 2004-203932. Among such methods, a production method that includes substituting a terminal halogen group of a vinyl polymer with a polymerizable compound containing a carbon-carbon double bond is preferred because it is easier to control.

The vinyl polymer containing a terminal halogen group may be prepared by a method in which a vinyl monomer is polymerized using an organohalide or sulfonyl halide compound as the initiator and a transition metal complex as the catalyst mentioned above, or by a method in which a vinyl monomer is polymerized using a halogen compound as the chain transfer agent. The former method is preferably employed.

The polymerizable compound containing a carbon-carbon double bond is not particularly limited, and examples thereof include compounds represented by the following formula (2): M⁺⁻OC(O)C(R^{C})=CH₂ (2).

Specific examples of the R^{C} in the formula (2) include -H, -CH₃, -CH₂CH₃, -(CH₂)ₙCH₃ (in which n represents an integer of 2 to 19), -C₆H₅, -CH₂OH, and -CN. Preferred are -H and -CH₃.

The M⁺ in the formula (2) is a counter cation of the oxyanion. Specific examples of M⁺ include alkali metal ions, more specifically, a lithium ion, sodium ion, potassium ion, and quaternary ammonium ions. Examples of the quaternary ammonium ions include a tetramethylammonium ion, tetraethylammonium ion, tetrabenzylammonium ion, trimethyldodecylammonium ion, tetrabutylammonium ion, and dimethylpiperidinium ion. Preferred are a sodium ion and a potassium ion.

The amount of the oxyanion in the formula (2) used is preferably 1 to 5 equivalents, and more preferably 1.0 to 1.2 equivalents, per halogen group.

The solvent used in the reaction is not particularly limited. Since the reaction is a nucleophilic substitution reaction, polar solvents are preferred, and examples thereof include tetrahydrofuran, dioxane, diethyl ether, acetone, dimethyl sulfoxide, dimethylformamide, dimethylacetamide, hexamethylphosphoric triamide, and acetonitrile.

The temperature during the reaction is, but not limited to, typically 0 to 150°C, preferably ambient temperature to 100°C for retaining the polymerizable terminal group.

### «Component (B)»

Examples of the photo-radical polymerization initiator (component (B)) include acetophenone, propiophenone, benzophenone, xanthol, fluorene, benzaldehyde, anthraquinone, triphenylamine, carbazole, 3-methylacetophenone, 4-methylacetophenone, 3-pentylacetophenone, 2,2-diethoxyacetophenone, 4-methoxyacetopohenone, 3-bromoacetophenone, 4-allylacetophenone, p-diacetylbenzene, 3-methoxybenzophenone, 4-methylbenzophenone, 4-chlorobenzophenone, 4,4'-dimethoxybenzophenone, 4-chloro-4'-benzylbenzophenone, 3-chloroxanthone, 3,9-dichloroxanthone, 3-chloro-8-nonylxanthone, benzoin, benzoin methyl ether, benzoin butyl ether, bis(4-dimethylaminophenyl) ketone, benzylmethoxy ketal, 2-chlorothioxanthone, 2,2-dimethoxy-1,2-diphenylethan-1-one, 1-hydroxy-cyclohexyl-phenyl-ketone, 2-hydroxy-2-methyl-1-phenyl-propane-1-one, 2-methyl-1-[4-(methylthio)phenyl]-2-morpholinopropane-1-one, 2-benzyl-2-dimethylamino-1-(4-morpholinophenyl)-butanone-1, and dibenzoyl.

Among these, preferred photo-radical initiators having good UV curability may be α-hydroxy ketone compounds (e.g., benzoin, benzoin methyl ether, benzoin butyl ether, 1-hydroxy-cyclohexyl-phenyl-ketone) and phenylketone derivatives (e.g., acetophenone, propiophenone, benzophenone, 3-methylacetophenone, 4-methylacetophenone, 3-pentylacetophenone, 2,2-diethoxyacetophenone, 4-methoxyacetopohenone, 3-bromoacetophenone, 4-allylacetophenone, 3-methoxybenzophenone, 4-methylbenzophenone, 4-chlorobenzophenone, 4,4'-dimethoxybenzophenone, 4-chloro-4'-benzylbenzophenone, bis(4-dimethylaminophenyl) ketone).

Examples of photo-radical initiators capable of suppressing the inhibition by oxygen on the surface of the cured product include: those having at least two photodegradable groups within a molecule, such as 2-hydroxy-1-[4-[4-(2-hydroxy-2-methyl-propionyl)-benzyl] phenyl]-2-methyl-propane-1-one (trade name: IRGACURE 127, product of BASF), 1-[4-(4-benzoylphenylsulfanyl) phenyl]-2-methyl-2-(4-methylphenylsulfonyl)propane-1-one (trade name: ESACURE 1001M, product of LAMBERTI), methyl benzoyl formate (trade name: SPEEDCURE MBF, product of LAMBSON), O-ethoxyimino-1-phenylpropane-1-one (trade name: SPEEDCURE PDO, product of LAMBSON), and oligo[2-hydroxy-2-methyl-1-[4-(1-methylvinyl)phenyl]propanone] (trade name: ESACURE KIP150, product of LAMBERTI); and hydrogen abstraction-type photo-radical initiators having at least three aromatic rings within a molecule, such as 1,2-octanedione, 1-[4-(phenylthio)phenyl]-, 2-(O-benzoyloxime) (e.g., IRGACURE OXE01 from BASF); ethanone, 1-[9-ethyl-6-(2-methylbenzoyl)-9H-carbazol-3-yl]-, 1-(O-acetyloxime) (e.g., IRGACURE OXE02 from BASF); 4-benzoyl-4'-methyl diphenyl sulfide, 4-phenylbenzophenone, and 4,4',4"-(hexamethyltriamino)triphenylmethane.

Other examples include acylphosphineoxide photo-radical initiators which characteristically improve the depth curability, such as 2,4,6-trimethylbenzoyl-diphenyl-phosphine oxide, bis(2,4,6-trimethylbenzoyl)-phenyl phosphine oxide, and bis(2,6-dimethylbenzoyl)-2,4,4-trimethyl-pentylphosphine oxide.

In terms of the balance between the active energy ray curability and the storage stability of the active energy ray-curable composition of the present invention, more preferred are 1-hydroxy-cyclohexyl-phenyl-ketone (trade name: IRGACURE 184, product of BASF), 2-hydroxy-2-methyl-1-phenyl-propane-1-one (trade name: DAROCUR 1173, product of BASF), bis(4-dimethylaminophenyl) ketone, 2-hydroxy-1-[4-[4-(2-hydroxy-2-methyl-propionyl)-benzyl]phenyl]-2-methyl-propane-1-one (trade name: IRGACURE 127, product of BASF), 1-[4-(4-benzoylphenylsulfanyl)-phenyl]-2-methyl-2-(4-methylphenylsulfonyl)propane-1-one (trade name: ESACURE 1001M), methyl benzoyl formate (trade name: SPEEDCURE MBF, product of LAMBSON), O-ethoxyimino-1-phenylpropane-1-one (trade name: SPEEDCURE PDO, product of LAMBSON), oligo[2-hydroxy-2-methyl-1-[4-(1-methylvinyl)phenyl]propanone (trade name: ESACURE KIP150, product of LAMBERTI); 1,2-octanedione, 1-[4-(phenylthio)phenyl]-, 2-(O-benzoyloxime) (e.g., IRGACURE OXE01 from BASF); ethanone, 1-[9-ethyl-6-(2-methylbenzoyl)-9H-carbazol-3-yl]-, 1-(O-acetyloxime) (e.g., IRGACURE OXE02 from BASF), 4-benzoyl-4'-methyl diphenyl sulfide, 4-phenylbenzophenone, 4,4',4"-(hexamethyl-triamino)triphenylmethane, bis(2,4,6-trimethylbenzoyl)-phenyl phosphine oxide (trade name: IRGACURE 819, product of BASF), bis(2,6-dimethylbenzoyl)-2,4,4-trimethyl-pentylphosphine oxide, and 2,4,6-trimethylbenzoyl-diphenyl-phosphine oxide (trade name: Lucirin TPO, product of BASF).

A near-infrared light-absorbing cationic dye may be used as a near-infrared light radical initiator. Preferred examples of the near-infrared light-absorbing cationic dye include near-infrared light-absorbing cationic dye-borate anion complexes which are excited by light energy in the region of 650 to 1500 nm, as disclosed in, for example, JP-A H03-111402 and JP-A H05-194619. Such a dye is more preferably used in combination with a boron sensitizer.

Each of these photo-radical initiators may be used alone, or two or more of these may be used in admixture. Further, these photo-radical initiators may be used in combination with other compounds.

Specific examples of the combinations with other compounds for the purpose of improving the curability include: combinations with amines such as diethanolmethylamine, dimethylethanolamine, and triethanolamine; combinations with the amines plus iodonium salts such as diphenyliodonium chloride; and combinations with the amines plus pigments such as methylene blue.

When the photo-radical initiator is used, a polymerization inhibitor, such as hydroquinone, hydroquinone monomethyl ether, benzoquinone, and para-tertiary butyl catechol, may optionally be added.

In terms of the UV curability, the storage stability, and the transparency of the resulting cured product, the amount of component (B) added is preferably 0.001 to 10 parts by weight, more preferably 0.005 to 5 parts by weight, still more preferably 0.01 to 3 parts by weight, and most preferably 0.02 to 1 part by weight, per 100 parts by weight in total of the component (A) and the component (D). If the amount of component (B) added is less than 0.001 parts by weight, the UV curability may be lowered. If the amount of component (B) added is more than 10 parts by weight, the storage stability and the transparency of the cured product may be lowered. In the case where the composition does not contain the component (D), the amount of component (D) is regarded to be 0 parts by weight.

### «Component (C)»

The component (C) is at least one selected from hindered phenol antioxidants, hindered amine antioxidants, and phosphorus antioxidants, and is used for thermal coloring resistance and light-induced coloring resistance of the cured product. Antioxidants containing sulfur are not preferred because they are likely to cause coloring in a light resistance test.

The hindered phenol antioxidants are not particularly limited and a wide range of conventionally known ones can be used. Specific examples thereof include 2,6-di-tert-butyl-4-methylphenol, 2,6-di-tert-butyl-4-ethylphenol, mono- or di- or tri-(α-methylbenzyl)phenol, 2,2'-methylene bis(4-ethyl-6-tert-butylphenol), 2,2'-methylene bis(4-methyl-6-tert-butylphenol), 4,4'-butylidene bis(3-methyl-6-tert-butylphenol), 2,5-di-tert-butylhydroquinone, 2,5-di-tert-amylhydroquinone, triethyleneglycol-bis-[3-(3-t-butyl-5-methyl-4-hydroxyphenyl)propionate], 1,6-hexanediol-bis[3-(3,5-di-t-butyl-4-hydroxyphenyl)propionate], pentaerythrityl-tetrakis[3-(3,5-di-t-butyl-4-hydroxyphenyl)propionate], octadecyl-3-(3,5-di-t-butyl-4-hydroxyphenyl)propionate, N,N'-hexamethylenebis(3,5-di-t-butyl-4-hydroxyhydrocinnamide), 3,5-di-t-butyl-4-hydroxybenzylphosphonate-diethyl ester, 1,3,5-trimethyl-2,4,6-tris(3,5-di-t-butyl-4-hydroxybenzyl)benzene, calcium bis(3,5-di-t-butyl-4-hydroxybenzylphosphonic acid ethyl ester), tris-(3,5-di-t-butyl-4-hydroxybenzyl) isocyanurate, N,N'-bis[3-(3,5-di-t-butyl-4-hydroxyphenyl)propionyl]-hydrazine, tris(2,4-di-t-butyl phenyl)phosphite, 2-(5-methyl-2-hydroxyphenyl)benzotriazole, 2-[2-hydroxy-3,5-bis(α,α-dimethylbenzyl)phenyl]-2H-benzotriazole, 2-(3,5-di-t-butyl-2-hydroxyphenyl)-benzotriazole, 2-(3-t-butyl-5-methyl-2-hydroxyphenyl)-5-chlorobenzotriazole, 2-(3,5-di-t-butyl-2-hydroxyphenyl)-5-chlorobenzotriazole, 2-(3,5-di-t-amyl-2-hydroxyphenyl)-benzotriazole, 2-(2'-hydroxy-5'-t-octylphenyl)benzotriazole, methyl-3-[3-t-butyl-5-(2H-benzotriazol-2-yl)-4-hydroxyphenyl]propionate-polyethylene glycol (molecular weight: about 300) condensates, hydroxyphenylbenzotriazole derivatives, 2-(3,5-di-t-butyl-4-hydroxybenzyl)-2-n-butylmalonic acid bis(1,2,2,6,6-pentamethyl-4-piperidyl) ester, 2,4-di-t-butylphenyl-3,5-di-t-butyl-4-hydroxybenzoate, tetrakis[methylene-3-(3,5-di-tert-butyl-4-hydroxyphenyl)propionate]methane, tris-[N-(3,5-di-t-butyl-4-hydroxybenzyl)] isocyanurate, and 3,9-bis{2-[3-(3-tert-butyl-4-hydroxy-5-methylphenyl)-propionyloxy]-1,1-dimethylethyl}-2,4,8,10-tetraoxaspiro[5.5]undecane.

Commercial examples of such products include, but are not limited to, those having trade names such as: Nocrac 200, Nocrac M-17, Nocrac SP, Nocrac SP-N, Nocrac NS-5, Nocrac NS-6, Nocrac NS-30, Nocrac NS-7 and Nocrac DAH (all from Ouchi Shinko Chemical Industrial Co., Ltd.) ; ADK STAB AO-20, ADK STAB AO-30, ADK STAB AO-40, ADK STAB AO-50, ADK STAB AO-60, ADK STAB AO-70, ADK STAB AO-80 and ADK STAB AO-330 (all from ADEKA CORPORATION) ; IRGANOX-245, IRGANOX-259, IRGANOX-1010, IRGANOX-1024, IRGANOX-1076, IRGANOX-1098, IRGANOX-1330, and IRGANOX-1425WL (all from Ciba Japan); and Sumilizer GM and Sumilizer GA-80 (both from Sumitomo Chemical Co. , Ltd.). Each of these hindered phenol antioxidants may be used alone, or two or more of them may be used in combination.

Among these, hindered phenol antioxidants having a hindered phenol structure with hindrance on one side are more preferred than those having a hindered phenol structure with hindrance on both sides because they more effectively suppress the coloring caused by heat or light.

In terms of the advantage of a smaller loss by thermal volatilization, more preferred are hindered phenol antioxidants having a molecular weight of 600 or more, such as tetrakis[methylene-3-(3,5-di-tert-butyl-4-hydroxyphenyl)-propionate]methane, tris-[N-(3,5-di-t-butyl-4-hydroxybenzyl)] isocyanurate, 1,3,5-trimethyl-2,4,6-tris(3,5-di-t-butyl-4-hydroxybenzyl)benzene, and 3,9-bis{2-[3-(3-tert-butyl-4-hydroxy-5-methylphenyl)-propionyloxy]-1,1-dimethylethyl}-2,4,8,10-tetraoxaspiro[5,5]undecane. Here, the molecular weight can be determined using GC-MS or LC-MS.

The amount of the hindered phenol antioxidant used is preferably 0.01 to 5 parts by weight, more preferably 0.02 to 3 parts by weight, and most preferably 0.03 to 1 part by weight, per 100 parts by weight in total of the component (A) and the component (D). If the amount used is less than 0.01 parts by weight, the effect of suppressing coloring may be poor. If the amount used is more than 5 parts by weight, the antioxidant itself may rather cause coloring. In the case where the composition does not contain the component (D), the amount of component (D) is regarded to be 0 parts by weight.

The hindered amine antioxidants are compounds containing, per molecule, at least one hindered piperidine group represented by the following formula (3):

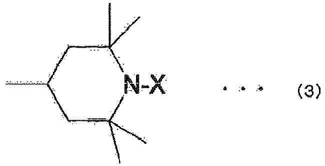

wherein X is represented by -H, -R, -OR', or -R"- (in which R, R', and R" each represent a monovalent or divalent substituent group containing carbon, hydrogen, and oxygen), typically, but not limited to, a methyl group, an ethyl group, a C3-20 alkyl group containing an alicyclic structure, a C2-20 acyl group (e.g. an acetyl group, a propionyl group), a C1-20 alkylene group, or a polyester unit derived from succinic acid/ethylene glycol, and in the case of a divalent substituent group such as a C1-20 alkylene group or a polyester unit derived from succinic acid/ethylene glycol, the other terminal thereof is bonded to another hindered piperidine group.

The hindered amine antioxidants are not particularly limited, and a wide range of conventionally known ones can be used.
Specific examples thereof include, but not limited to, CHIMASSORB 119, CHIMASSORB 2020, CHIMASSORB 944, TINUVIN 622, TINUVIN B75, TINUVIN 783, TINUVIN 111, TINUVIN 791, TINUVIN C353, TINUVIN 494, TINUVIN 492, TINUVIN 123, TINUVIN 144, TINUVIN 152, TINUVIN 292, TINUVIN 5100, TINUVIN 765, TINUVIN 770, TINUVIN XT850, TINUVIN XT855, TINUVIN 440, and TINUVIN NOR371 (all from Chiba Japan); ADK STAB LA-52, ADK STAB LA-57, ADK STAB LA-62, ADK STAB LA-67, ADK STAB LA-63, ADK STAB LA-63P, ADK STAB LA-68LD, ADK STAB LA-82, ADK STAB LA-87, ADK STAB LA-501, ADK STAB LA-502XP, ADK STAB LA-503, ADK STAB LA-77, ADK STAB LX-335, and ADEKA NOL UC-605 (all from ADEKA CORPORATION); SANOL LS770, SANOL LS765, SANOL LS292, SANOL LS440, SANOL LS744, SANOL LS2626, and SANOL LS944 (all from Sankyo Lifetech Co., Ltd.); HOSTAVIN N20, HOSTAVIN N24, HOSTAVIN N30, HOSTAVIN N321, HOSTAVIN PR31, HOSTAVIN 3050, HOSTAVIN 3051, HOSTAVIN 3052, HOSTAVIN 3053, HOSTAVIN 3055, HOSTAVIN 3058, HOSTAVIN 3063, HOSTAVIN 3212, HOSTAVIN TB01, HOSTAVIN TB02, and Nylostab S-EED (all from CLARIANT); TOMISORB 77(product of Yoshitomi Fine Chemicals Ltd.); CYASORB UV3346, CYASORB UV3529, and CYASORB UV3853 (all from SUN CHEMICAL COMPANY LTD.); SUMISORB TM61 (product of Sumitomo Chemical Co., Ltd.); GOOD-RITE UV3159, GOOD-RITE UV3034, GOOD-RITE UV3150, and GOOD-RITE 3110x128 (all from BF Goodrich); and UVINUL 4049, UVINUL 4050, and UVINUL 5050 (all from Ciba Japan). Each of these hindered amine antioxidants may be used alone, or two or more of these may be used in combination.

Among these hindered amine antioxidants, preferred are ADK STAB LA-63, ADK STAB LA-63P, TINUVIN 152, TINUVIN 123, SANOL LS765, HOSTAVIN N24, and HOSTAVIN N30, because the resulting curable composition has excellent storage stability and a cured product thereof has excellent weather resistance.

The amount of the hindered amine antioxidant used is preferably 0.01 to 5 parts by weight, more preferably 0.02 to 3 parts by weight, and most preferably 0.03 to 1 part by weight, per 100 parts by weight in total of the component (A) and the component (D). If the amount used is less than 0.01 parts by weight, the effect of suppressing coloring may not be exhibited. If the amount used is more than 5 parts by weight, the antioxidant itself may rather cause coloring. In the case where the composition does not contain the component (D), the amount of component (D) is regarded to be 0 parts by weight.

The phosphorus antioxidants are not particularly limited and any antioxidants may be used. Preferred are alkyl phosphite, aryl phosphite, or alkyl aryl phosphite compounds and like compounds which contain no phosphoric acid or no phosphoric acid ester within a molecule, because phosphoric acid and phosphoric acid esters which contain active hydrogen may affect the storage stability of the composition and the heat resistance of a cured product thereof.

Specific examples of the phosphorus antioxidants include tris(nonylphenyl) phosphite, tris(mono or dinonylphenyl) phosphite, diphenyl mono(2-ethylhexyl) phosphite, diphenyl mono(tridecyl) phosphite, diphenyl mono(isodecyl) phosphite, diphenyl mono (isooctyl) phosphite, diphenyl mono (nonylphenyl) phosphite, triphenyl phosphite, tris(tridecyl) phosphite, triisodecyl phosphite, tris(2,4-di-t-butylphenyl) phosphite, tetraphenyl dipropylene glycol diphosphite, tetraphenyl tetra(tridecyl) pentaerythritol tetraphosphite, 1,1,3-tris(2-methyl-4-di-tridecylphosphite-5-t-butylphenyl)butane, 4,4'-butylidenebis(3-methyl-6-t-butyl-di-tridecylphosphite), 2,2'-methylenebis(4,6-di-t-butylphenol) octylphosphite, 4,4'-isopropylidene-diphenolalkyl (C12-C15) phosphite, cyclic neopentanetetraylbis(2,4-di-t-butylphenylphosphite), cyclic neopentanetetraylbis(2,6-di-t-butyl-4-methylphenylphosphite), cyclic neopentanetetaylbis-(nonylphenylphosphite), bis(nonylphenyl)pentaerythritol diphosphite, distearyl pentaerythritol diphosphite; and phosphorous acid, bis[2,4-bis(1,1'-dimethylethyl)-6-methylphenyl]ethyl ester.

Commercial examples of such products include, but are not limited to, those having trade names such as: ADK STAB 1178, ADK STAB 329K, ADK STAB 135A, ADK STAB C, ADK STAB TPP, ADK STAB 3010, ADK STAB 2112, ADK STAB 522A, ADK STAB 260, ADK STAB HP-10, ADK STAB 1500, ADK STAB PEP-24-G, ADK STAB PEP-36, ADK STAB PEP-4C, and ADK STAB PEP-8 (all from ADEKA CORPORATION) ; JPM-308, JPM-313, JPM-333E, JPP-100, JPP-613M, and JPP-31 (all from JOHOKU CHEMICAL CO., LTD.); CHELEX-M (product of SAKAI CHEMICAL INDUSTRY CO., LTD.); and IRGAFOS 38(product of Ciba Japan).

In terms of stability against hydrolysis and good heat resistance, at least two substituent groups on the phosphorus atom in the phosphorus antioxidant are preferably aryloxy groups. Specifically, preferred are ADK STAB 1178, ADK STAB 329K, ADK STAB 135A, ADK STAB C, ADK STAB TPP, ADK STAB 2112, ADK STAB HP-10, JPM-313, JPP-100, CHELEX-M, and IRGAFOS 38.
Each of these phosphorus antioxidants may be used alone, or two or more of these may be used in combination.

The amount of the phosphorus antioxidant used is preferably 0.01 to 5 parts by weight, more preferably 0.02 to 3 parts by weight, and most preferably 0.03 to 1 part by weight, per 100 parts by weight in total of the component (A) and the component (D). If the amount used is less than 0.01 parts by weight, the effect of suppressing coloring may not be exhibited. If the amount used is more than 5 parts by weight, the antioxidant itself may rather cause coloring. In the case where the composition does not contain the component (D), the amount of component (D) is regarded to be 0 parts by weight.

One kind of component (C) may be used alone, or two or more kinds of component (C) may be used in combination. The phosphorus antioxidant significantly exhibits the effect of suppressing the coloring caused by heat or light when it is used in combination with at least one of the aforementioned hindered phenol antioxidant and hindered amine antioxidant. The ratio of the hindered phenol antioxidant and/or hindered amine antioxidant used to the phosphorus antioxidant used is not particularly limited. From the standpoint of more effectively enhancing the effect of suppressing the coloring caused by heat or light, the ratio of the total amount of the hindered phenol antioxidant and the hindered amine antioxidant to the amount of the phosphorus antioxidant is preferably in the range of 0.1 to 10, more preferably 0.3 to 3.

Preferred combinations of some kinds of component (C) are not particularly limited, and examples thereof include a combination of IRGANOX 1010 and ADK STAB 1178, a combination of Sumilizer GA-80 and ADK STAB 1178, a combination of ADK STAB LA-63P and ADK STAB 1178, and a combination of Sumilizer GA-80, ADK STAB LA-63P, and ADK STAB 1178.

The total amount of component (C) used is preferably 0.01 to 5 parts by weight, more preferably 0.02 to 3 parts by weight, and most preferably 0.03 to 1 part by weight, per 100 parts by weight in total of the component (A) and the component (D). If the amount used is less than 0.01 parts by weight, the effect of suppressing coloring may be poor. If the amount used is more than 5 parts by weight, the antioxidant itself may rather cause coloring. In the case where the composition does not contain the component (D), the amount of component (D) is regarded to be 0 parts by weight.

### «Component (D)»

The active energy ray-curable composition of the present invention may further contain a (meth)acrylate monomer (D) represented by the following formula (4):

R^{b}-OC(O)C(R^{a})=CH₂ (4)

wherein R^{a} represents a hydrogen atom or a C1-20 organic group, and R^{b} represents a C6-20 organic group.

The R^{a} may be one mentioned above as the R^{a} in the formula (1).
The R^{b} is a C6-20 organic group, more preferably a C8-18 organic group, and still more preferably a C12-15 organic group. If the carbon number is less than 6, the resulting component (D) is likely to be volatile and undergo a great change in weight at high temperatures. Conversely, if the carbon number is larger than 20, the resulting component (D) is likely to be highly viscous to decrease the effect of lowering the viscosity of the composition.

Specific examples of the component (D) include n-hexyl (meth)acrylate, n-heptyl (meth)acrylate, n-octyl (meth)acrylate, isooctyl (meth)acrylate, 2-ethylhexyl (meth)acrylate, n-nonyl (meth)acrylate, isononyl (meth)acrylate, n-decyl (meth)acrylate, isodecyl (meth)acrylate, n-dodecyl (meth)acrylate, tridecyl (meth)acrylate, stearyl (meth)acrylate, isostearyl (meth)acrylate, cyclohexyl (meth)acrylate, isobornyl (meth)acrylate, 3,3,5-trimethylcyclohexane (meth)acrylate, dicyclopentenyl (meth)acrylate, dicyclopentenyloxyethyl (meth)acrylate, dicyclopentanyl (meth)acrylate, dicyclopentanyloxyethyl (meth)acrylate, 1-adamanthyl (meth)acrylate, tricyclopentanyl (meth)acrylate, tricyclopentenyl (meth)acrylate, N-(meth)acryloyl-ε-caprolactam, 3,4-epoxycyclohexylmethyl (meth)acrylate, 3-ethyl-3-oxetanyl (meth)acrylate, phenyl (meth)acrylate, phenoxyethyl (meth)acrylate, toluyl (meth)acrylate, benzyl (meth)acrylate, nonylphenoxy polyethylene glycol (meth)acrylate, and O-phenylphenol (meth)acrylate. Other examples include compounds represented by the following formulae:

CH₂=CHC(O)O-(CH₂)ₙ-CH₃

(in which n represents an integer of 5 to 19);

CH₂=C(CH₃)C(O)O-(CH₂)ₙ-CH₃

(in which n represents an integer of 5 to 19);

CH₂=CHC(O)O-(CH₂CH₂O)ₙ-CH₃

(in which n represents an integer of 3 to 9);

CH₂=C(CH₃)C(O)O-(CH₂CH₂O)ₙ-CH₃

(in which n represents an integer of 3 to 9);

CH₂=CHC(O)O-(CH₂CH₂O)ₙ-CH₂CH₃

(in which n represents an integer of 2 to 9); and

CH₂=C(CH₃)C(O)O-(CH₂CH₂O)ₙ-CH₂CH₃

(in which n represents an integer of 2 to 9).

Since the resulting cured product has good elongation properties and excellent heat-resistant and light-resistant transparency and resistance to moisture penetration, the component (D) preferably has an acyclic aliphatic structure free from any ether structure. In this case, in particular, the component (D) preferably has a carbon number of 8 or more, more preferably 12 or more. Specific examples of the component (D) having an acyclic aliphatic structure include n-hexyl (meth)acrylate, n-heptyl (meth)acrylate, n-octyl (meth)acrylate, isooctyl (meth)acrylate, 2-ethylhexyl (meth)acrylate, n-nonyl (meth)acrylate, isononyl (meth)acrylate, n-decyl (meth)acrylate, isodecyl (meth)acrylate, n-dodecyl (meth)acrylate, tridecyl (meth)acrylate, stearyl (meth)acrylate, and isostearyl (meth)acrylate. Other examples include compounds represented by the following formulae:

CH₂=CHC(O)O-(CH₂)ₙ-CH₃

(in which n represents an integer of 5 to 19); and

CH₂=C(CH₃)C(O)O-(CH₂)ₙ-CH₃

(in which n represents an integer of 5 to 19).

Moreover, since the resulting cured product has good strength properties and excellent heat-resistant and light-resistant transparency and resistance to moisture penetration, the component (D) more preferably has an alicyclic aliphatic structure. Specific examples thereof include cyclohexyl (meth)acrylate, isobornyl (meth)acrylate, 3,3,5-trimethylcyclohexane (meth)acrylate, dicyclopentenyl (meth)acrylate, dicyclopentenyloxyethyl (meth)acrylate, dicyclopentanyl (meth)acrylate, dicyclopentanyloxyethyl (meth)acrylate, 1-adamanthyl (meth)acrylate, tricyclopentanyl (meth)acrylate, and tricyclopentenyl (meth)acrylate.

Among these, more preferred are those having a polycyclic aliphatic structure. Specific examples thereof include dicyclopentenyl (meth)acrylate, dicyclopentenyloxyethyl (meth)acrylate, dicyclopentanyl (meth)acrylate, dicyclopentanyloxyethyl (meth)acrylate, 1-adamanthyl (meth)acrylate, tricyclopentanyl (meth)acrylate, and tricyclopentenyl (meth)acrylate.

Among the above examples of the component (D), preferred are isononyl acrylate, isodecyl acrylate, n-dodecyl acrylate, isostearyl acrylate, isobornyl acrylate, and dicyclopentanyl acrylate, because they are excellent in the balance among the effect of lowering the viscosity, low volatility, heat-resistant and light-resistant transparency, and resistance to moisture penetration.
One kind of component (D) may be used alone, or two or more kinds of component (D) may be used in combination.

The amount of component (D) used is preferably 1 to 60% by weight, more preferably 5 to 50% by weight, and still more preferably 10 to 40% by weight, based on a total of 100% by weight of the active energy ray-curable composition. If the amount of component (D) used is less than 1% by weight, the effect of lowering the viscosity is not achieved. Conversely, if the amount of component (D) used is more than 60% by weight, much heat may be produced in curing and thereby reduce the transparency of the resulting cured product, form an irregular surface thereon, and damage the base material by heat.

When the component (D) that is more colorless than the component (A) is used, coloring of the active energy ray-curable composition is reduced while the active energy ray curability including depth curability is enhanced. Thus, in this case, the component (D) is preferably used in the above amount range.

### «Curable composition»

The active energy ray-curable composition of the present invention contains the components (A) to (C) and optionally the component (D). In order to adjust the physical properties, the composition may optionally further incorporate various additives such as polymerizable monomers and/or oligomers, other vinyl polymers, other resins, photo-curable substances, air-oxidation-curable substances, other initiators, adhesion promoters, coupling agents, curability modifiers, metal soaps, fillers, hollow microballoons, plasticizers, solvents, flame retardants, ultraviolet absorbers, light stabilizers, other antioxidants, thermal stabilizers, physical property modifiers, radical inhibitors, metal deactivators, antiozonants, phosphorus-containing peroxide decomposers, lubricants, pigments, blowing agents, surfactants, storage stability improvers, inorganic fillers, thickeners, thixotropic agents, electrical conductivity-imparting agents, antistatic agents, radiation blockers, and nucleating agents, as appropriate. Each of these additives may be used alone, or two or more of these may be used in combination.
Specific examples of these additives may be mentioned in, for example, JP-B H04-69659, JP-B H07-108928, JP-A S63-254149, and JP-A S64-22904.

### <Polymerizable monomer and/or oligomer>

The active energy ray-curable composition of the present invention may contain polymerizable monomers and/or oligomers other than the components (A) and (D) as long as the effect of the present invention is not impaired. Each of these may be used alone, or two or more of these may be used in combination. In particular, monomers and/or oligomers containing radical polymerizable groups are preferred in terms of curability.

Examples of the radical polymerizable groups include (meth)acryloyl groups such as (meth)acryl groups, styrene groups, acrylonitrile groups, vinyl ester groups, N-vinylpyrrolidone groups, acrylamide groups, conjugated diene groups, vinyl ketone groups, and vinyl chloride groups. Among these, preferred are those containing (meth)acryloyl groups that are similar to that of the vinyl polymer (A) because they have good copolymerizability leading to a small amount of unreacted components.

Specific examples of the monomers include (meth)acrylate monomers, cyclic acrylates, styrene monomers, acrylonitrile, vinyl ester monomers, N-vinylpyrrolidone, acrylamide monomers, conjugated diene monomers, vinyl ketone monomers, vinyl halide monomers, vinylidene halide monomers, and polyfunctional monomers.

Examples of the (meth)acrylate monomers include methyl (meth)acrylate, ethyl (meth)acrylate, n-propyl (meth)acrylate, isopropyl (meth)acrylate, n-butyl (meth)acrylate, isobutyl (meth)acrylate, tert-butyl (meth)acrylate, n-pentyl (meth)acrylate, 2-methoxyethyl (meth)acrylate, 3-methoxybutyl (meth)acrylate, 2-hydroxyethyl (meth)acrylate, 2-hydroxypropyl (meth)acrylate, glycidyl (meth)acrylate, 2-aminoethyl (meth)acrylate, N-(meth)acryloyl morpholine, tetrahydrofuranyl (meth)acrylate, γ-(methacryloyloxypropyl) trimethoxysilane, (meth)acrylic acid-ethylene oxide adducts, (meth)acrylic acid-propylene oxide adducts, trifluoromethylmethyl (meth)acrylate, 2-trifluoromethylethyl (meth)acrylate, 2-perfluoroethylethyl (meth)acrylate, 2-perfluoroethyl-2-perfluorobutylethyl (meth)acrylate, 2-perfluoroethyl (meth)acrylate, perfluoromethyl (meth)acrylate, diperfluoromethylmethyl (meth)acrylate, 2-perfluoromethyl-2-perfluoroethylethyl (meth)acrylate, 2-perfluorohexylethyl (meth)acrylate, 2-perfluorodecylethyl (meth)acrylate, and 2-perfluorohexadecylethyl (meth)acrylate. Other examples include the following compounds.

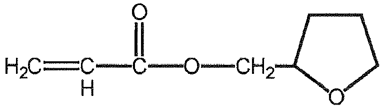

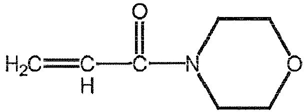

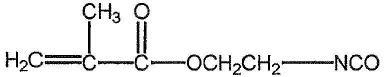

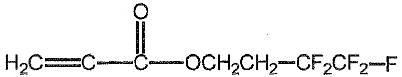

Examples of the styrene monomers include styrene and α-methylstyrene.
Examples of the vinyl ester monomers include vinyl acetate, vinyl propionate, and vinyl butyrate.
Examples of the acrylamide monomers include acrylamide and N,N-dimethylacrylamide.
Examples of the conjugated diene monomers include butadiene and isoprene.
Examples of the vinyl ketone monomers include methyl vinyl ketone.
Examples of the vinyl halide monomers and vinylidene halide monomers include vinyl chloride, vinyl bromide, vinyl iodide, vinylidene chloride, and vinylidene bromide.
Examples of the polyfunctional monomers include triethylene glycol di(meth)acrylate, dipropylene glycol di(meth)acrylate, 3-methyl-1, 5-pentanediol di(meth)acrylate, 1,6-hexanediol di(meth)acrylate, 1,7-heptanediol di(meth)acrylate, 1,8-octanediol di(meth)acrylate, 2-methyl-1,8-octanediol di(meth)acrylate, 1,9-nonanediol di(meth)acrylate, 1,10-decanediol di(meth)acrylate, cyclohexane dimethanol di(meth)acrylate, dimethyloltricyclodecane di(meth)acrylate, 1,3-adamantane dimethanol di(meth)acrylate, neopentyl glycol polypropoxy di(meth)acrylate, bisphenol F polyethoxy di(meth)acrylate, bisphenol A polyethoxy di(meth)acrylate, trimethylolpropane polyethoxy tri(meth)acrylate, trimethyrolpropane tri(meth)acrylate, pentaerythritol tetra(meth)acrylate, ditrimethylolpropane tetra(meth)acrylate, dipentaerythritol penta(meth)acrylate, and dipentaerythritol hexa(meth)acrylate. Other examples include compounds represented by the following formulae:

CH₂=CHC(O)O-(CH₂)ₙ-OC(O)CH=CH₂

(in which n represents an integer of 6 to 20);

CH₂=C(CH₃)C(O)O-(CH₂)ₙ-OC(O)C(CH₃)=CH₂

(in which n represents an integer of 6 to 20);

CH₂=CHC(O)O-(CH₂CH₂O)ₙ-OC(O)CH=CH₂

(in which n represents an integer of 3 to 10); and

CH₂=C(CH₃)C(O)O-(CH₂CH₂O)ₙ-OC(O)C(CH₃)=CH₂

(in which n represents an integer of 3 to 10).

Examples of the oligomers include: epoxy acrylate resins such as bisphenol A epoxy acrylate resins, phenol novolac epoxy acrylate resins, cresol novolac epoxy acrylate resins, and COOH group-modified epoxy acrylate resins; urethane acrylate resins obtained by reacting an urethane resin that is obtained from a polyol (e.g., polytetramethylene glycol, polyester diols of ethylene glycol and adipic acid, ε-caprolactone-modified polyester diols, polypropylene glycol, polyethylene glycol, polycarbonate diol, hydroxyl group-terminated hydrogenated polyisoprenes, hydroxyl group-terminated polybutadiene, hydroxyl group-terminated polyisobutylene) and an organic isocyanate (e.g., tolylene diisocyanate, isophorone diisocyanate, diphenylmethane diisocyanate, hexamethylene diisocyanate, xylylene diisocyanate), with a hydroxy group-containing (meth)acrylate (e.g., hydroxyethyl (meth)acrylate, hydroxypropyl (meth)acrylate, hydroxybutyl (meth)acrylate, pentaerythritol triacrylate); resins obtained by introducing a (meth) acryl group into the polyol via an ester bond; and polyester acrylate resins, and poly(meth)acrylacrylate resins (poly(meth)acrylic acid ester resins containing polymerizable reactive groups).

In order to improve the insulating properties, radical reactive oligomers having a hydrophobic backbone may be added. Examples thereof include di(meth)acrylates having a polybutadiene skeleton (trade name: BAC-45, product of OSAKA ORGANIC CHEMICAL INDUSTRY LTD.), urethane acrylates having a bisphenol A skeleton, epoxy acrylates having a bisphenol A skeleton, polyester acrylates having a bisphenol A skeleton, and hydrogenated products of the foregoing.

Among these, monomers and/or oligomers each containing a (meth)acryloyl group are preferred. The monomers and/or oligomers each containing a (meth)acryloyl group preferably have a number average molecular weight of 5000 or less. From the standpoints of improvement in the surface curability, reduction in the viscosity for improving the workability, and compatibility, the monomers, when used, more preferably have a molecular weight of 1000 or less.

The amount of the polymerizable monomer and/or oligomer used is, from the standpoints of improvement in the surface curability, impartation of toughness, and better workability achieved by reduction in the viscosity, preferably 1 to 200 parts by weight, and more preferably 5 to 100 parts by weight, per 100 parts by weight in total of the component (A) and the component (D). In the case where the composition does not contain the component (D), the amount of component (D) is regarded to be 0 parts by weight.

In radical curing by UV rays, curing of the surface is likely to be inhibited by oxygen. In order to reduce the inhibition of surface curing, polymerizable monomers and/or oligomers containing an ether, hydroxy or amino group, among the aforementioned monomers and oligomers, can preferably be used. The amount thereof is preferably 1 to 10 parts by weight per 100 parts by weight in total of the component (A) and the component (D). If the amount used is less than 1 part by weight, the effect thereof cannot be obtained. Conversely, if the amount is more than 10 parts by weight, the physical properties may be adversely affected. In the case where the composition does not contain the component (D), the amount of component (D) is regarded to be 0 parts by weight.

When the polymerizable monomer and/or oligomer are used, the curing reaction by polymerization of the (meth)acryloyl group (s) of the component (A) (and optionally the component (D)) and another curing reaction can be carried out together to cure the active energy ray-curable composition of the present invention. For example, in the case of UV curing of the active energy ray-curable composition of the present invention, a shaded part that is not exposed to UV rays is insufficiently cured. In such a case, a combination of the curing reactions enables the shaded part to be cured.

### <Other vinyl polymers>

In the case of carrying out a combination of curing reactions as described above, other vinyl polymers may be added for curing. Examples of the other vinyl polymers include vinyl polymers obtained by replacing the molecular terminal functional group, (meth)acryloyl group, in the component (A) by an epoxy, alkenyl or hydrolyzable silyl group. The methods for introducing these functional groups are described below.

### [Epoxy group]

An epoxy group may be introduced into the vinyl polymer by a known method. Examples thereof include methods as disclosed in the paragraphs [0039] to [0056] of JP-A 2000-154212. Some preferred examples are also mentioned in the same paragraphs.

### [Alkenyl group]

An alkenyl group capable of being hydrosilylated may be introduced into the vinyl polymer by a known method. Examples thereof include methods as disclosed in the paragraphs [0042] to [0086] of JP-A 2004-059783. Some preferred examples are also mentioned in the same paragraphs.

### [Hydrolyzable silyl group]

A hydrolyzable silyl group may be introduced into the vinyl polymer by a known method. Examples thereof include methods as disclosed in the paragraphs [0076] to [0138] of JP-A 2000-191912. Some preferred examples are also mentioned in the same paragraphs.

The following may be used as the polymerization initiator or polymerization catalyst when a vinyl polymer containing an epoxy, alkenyl or hydrolyzable silyl group as a terminal functional group is used.
In the case of the vinyl polymer containing an epoxy group as a terminal functional group, for example, the polymerization initiator or polymerization catalyst may be one mentioned in the paragraph [0059] of JP-A 2000-154212.
In the case of the vinyl polymer containing an alkenyl group as a terminal functional group, a hydrosilyl group-containing compound is suitably further used in combination, and examples thereof include those mentioned in the paragraphs [0087] to [0091] of JP-A 2004-059783. In order to promote the hydrosilylation, a hydrosilylation catalyst is preferably used in combination, and examples thereof include those mentioned in the paragraph [0092] of the same patent literature.
In the case of the vinyl polymer containing a hydrolyzable silyl group as a terminal functional group, the curing catalyst is suitably used, and examples thereof include those mentioned in the paragraphs [0147] to [0150] of JP-A 2000-191912.

### <Other resins>

Another curing reaction other than the above curing reactions may be combined by adding a resin such as epoxy, cyanate; phenol, polyimide, urethane, or silicone resins. Among these, transparent epoxy resins are preferred because they are highly transparent and excellent in practical properties such as adhesiveness.

Examples of the transparent epoxy resins include those obtained by curing an epoxy resin (e.g., bisphenol A diglycidyl ether, 2,2'-bis(4-glycidyloxycyclohexyl)propane, 3,4-epoxycyclohexylmethyl-3,4-epoxycyclohexane carboxylate, vinylcyclohexene dioxide, 2-(3,4-epoxycyclohexyl)-5,5-spiro-(3,4-epoxycyclohexane)-1,3-dioxane, bis(3,4-epoxycyclohexyl)adipate, 1,2-cyclopropanedicarboxylic acid bisglycidyl ester, triglycidyl isocyanurate, monoallyl diglycidyl isocyanurate, and diallyl monoglycidyl isocyanurate) using an aliphatic acid anhydride (e.g., hexahydrophthalic anhydride, methylhexahydrophthalic anhydride, trialkyltetrahydrophthalic anhydrides, hydrogenated methyl nadic anhydride). Each of these epoxy resins or curing agents may be used alone, or two or more of these may be used in combination.

### <Photo-curable substance>

The active energy ray-curable composition of the present invention may optionally contain a photo-curable substance. The photo-curable substance undergoes a chemical change in the molecular structure by the action of light in a short time to cause a physical change such as curing. The addition of a photo-curable substance reduces the tackiness (also referred to as residual tackiness) on the surface of a cured product obtained by curing the curable composition. Such photo-curable substances can be cured by irradiation with light, and typical photo-curable substances are cured, for example, by standing still indoors at a place exposed to sunlight (near a window) at ambient temperatures for one day. Many examples of such compounds are known, such as organic monomers, oligomers, resins, and compositions containing the foregoing. Though the type thereof is not particularly limited, examples include unsaturated acrylic compounds, polyvinyl cinnamates, and azide resins.

The polyvinyl cinnamates are photosensitive resins containing a cynnamoyl group as the photosensitive group, and examples thereof include those obtained by esterifying polyvinyl alcohol with cinnamic acid and various polyvinyl cinnamate derivatives.
The azide resins are known as photosensitive resins containing an azide group as the photosensitive group, and examples thereof include photosensitive rubber solutions typically containing an azide compound as the photosensitizer, and those specifically mentioned in "Kankousei Jushi (Photosensitive Resins)" (published on March 17, 1972 by Insatsu Gakkai Shuppanbu Ltd., p. 93 ff., p. 106 ff., and p. 117 ff.). Each of these may be used alone or two or more may be used in admixture, optionally along with a sensitizer.
Among the above photo-curable substances, unsaturated acrylic compounds are preferred because of their good workability.

The amount of the photocurable substance added is preferably 0.01 to 20 parts by weight per 100 parts by weight in total of the component (A) and the component (D). If the amount is less than 0.01 parts by weight, the effect may be small. If the amount is more than 20 parts by weight, the physical properties may be adversely affected. In the case where the composition does not contain the component (D), the amount of component (D) is regarded to be 0 parts by weight. In some cases, the addition of a sensitizer (e.g. ketones and nitro compounds) or an accelerator (e.g. amines) can enhance the effect.

### <Air-oxidation-curable substance>

The active energy ray-curable composition of the present invention may optionally contain an air-oxidation-curable substance. The air-oxidation-curable substance is a compound containing an unsaturated group capable of being crosslinked and cured by oxygen in the air. The addition of an air-oxidation-curable substance reduces the tackiness (also referred to as residual tackiness) on the surface of a cured product obtained by curing the curable composition. The air-oxidation-curable substance is a substance that can be cured by contact with the air, more specifically a substance that is able to be cured by a reaction with oxygen in the air. Typical air-oxidation-curable substances are cured, for example, by standing still indoors in the air for one day.

Specific examples of the air-oxidation-curable substance include: drying oils such as tung oil and linseed oil; various alkyd resins obtained by modifying the drying oils; drying oil-modified acrylic polymers, epoxy resins, and silicone resins; and 1,2-polybutadiene, 1,4-polybutadiene, and polymers and copolymers of C5-C8 dienes, and various modified products of these polymers and copolymers (e.g., maleate-modified products, boiled-oil-modified products). Among these, tung oil, liquid diene polymers, and modified product thereof are particularly preferred.

Specific examples of the liquid diene polymers include: liquid polymers obtained by polymerizing or copolymerizing diene compounds such as butadiene, chloroprene, isoprene, and 1,3-pentadiene; and polymers (e.g. NBR and SBR) obtained by copolymerizing the diene compound and a copolymerizable monomer such as acrylonitrile and styrene in such a manner that the diene compound is used as the main component, and various modified products thereof (e.g., maleate-modified products, boiled-oil-modified products). Each of these may be used alone, or two or more of these may be used in combination. Among these liquid diene compounds, liquid polybutadiene is preferred.

Each of the air-oxidation-curable substances may be used alone, or two or more of these may be used in combination. The combined use of the air-oxidation-curable substance and a catalyst or metal dryer for promoting the oxidation curing reaction can enhance the effect in some cases. Examples of the catalyst and metal dryer include metal salts such as cobalt naphthenate, lead naphthenate, zirconium naphthenate, cobalt octylate, and zirconium octylate, and amine compounds.

The amount of the air-oxidation-curable substance added is preferably 0.01 to 20 parts by weight per 100 parts by weight in total of the component (A) and the component (D). If the amount is less than 0.01 parts by weight, the effect may be small. If the amount is more than 20 parts by weight, the physical properties may be adversely affected.

### <Other initiators>

Thermal radical initiators and redox initiators may be used as initiators other than the photo-radical polymerization initiator (component (B)). Each of these initiators may be used alone, or two or more of these may be used in combination.

The thermal radical initiators are not particularly limited, and examples thereof include azo initiators, peroxide initiators, and persulfate initiators.

Examples of the azo initiators include, but not limited to, 2,2'-azobis(4-methoxy-2,4-dimethylvaleronitrile) (VAZO33), 2,2'-azobis(2-amidinopropane) dihydrochloride (VAZO50), 2,2'-azobis(2,4-dimethylvaleronitrile) (VAZO52), 2,2'-azobis(isobutyronitrile) (VAZO64), 2,2'-azobis-2-methylbutyronitrile (VAZO67), 1,1-azobis(1-cyclohexanecarbonitrile) (VAZO88) (all available from DuPont Chemical), 2,2'-azobis(2-cyclopropylpropionitrile), and 2,2'-azobis(methylisobutyrate) (V-601) (available from Wako Pure Chemical Industries, Ltd.).

Examples of the peroxide initiators include, but not limited to, benzoyl peroxide, acetyl peroxide, lauroyl peroxide, decanoyl peroxide, dicetylperoxydicarbonate, di(4-t-butylcyclohexyl)peroxydicarbonate (Perkadox 16S) (available from Akzo Nobel), di(2-ethylhexyl)peroxydicarbonate, t-butylperoxypivalate (Lupersol 11) (available from Elf Atochem), t-butylperoxy-2-ethylhexanoate (Trigonox 21-C50) (available from Akzo Nobel), and dicumyl peroxide.

Examples of the persulfate initiators include, but not limited to, potassium persulfate, sodium persulfate, and ammonium persulfate.

The thermal radical initiator is preferably selected from the group consisting of azo initiators and peroxide initiators. More preferred are 2,2'-azobis(methylisobutyrate), t-butylperoxypivalate, di(4-t-butylcyclohexyl)-peroxydicarbonate, and mixtures of these.
Each of the thermal radical initiators may be used alone, or two or more of these may be used in combination.

The amount of the thermal radical initiator used is preferably 0.01 to 5% by weight, and more preferably 0.05 to 2% by weight, based on a total of 100% by weight of the active energy ray-curable composition.

The redox (oxidation/reduction) initiators can be used in a wide temperature range. Especially, the following initiator systems can advantageously be used at ambient temperatures.

Examples of appropriate redox initiators include, but not limited to: combinations of the persulfate initiators and reductants (e.g., sodium metabisulfite, sodium bisulfite); combinations of organic peroxides and tertiary amines, for example, a combination of benzoyl peroxide and dimethylaniline and a combination of cumene hydroperoxide and an aniline; and combinations of organic peroxides and transition metals, for example, a combination of cumene hydroperoxide and cobalt naphthenate.

The redox initiator is preferably a combination of an organic peroxide and a tertiary amine or a combination of an organic peroxide and a transition metal, and is more preferably a combination of cumene hydroperoxide and an aniline or a combination of cumene hydroperoxide and cobalt naphthenate. Each of the redox initiator systems may be used alone, or two or more of these may be used in combination.

The amount of the redox initiator used is preferably 0.01 to 5% by weight, and more preferably 0.05 to 2% by weight, based on a total of 100% by weight of the active energy ray-curable composition.

### <Adhesion promoter>

The active energy ray-curable composition of the present invention may contain a silane coupling agent or an adhesion promoter other than silane coupling agents. The addition of an adhesion promoter further reduces the risk that the cured product of the present invention may be separated from the adherend. Additionally, in some cases, the primer treatment for improving the adhesion can be expected to be simplified.

Specific examples of the silane coupling agent include silane coupling agents containing a functional group such as an amino group, a mercapto group, an epoxy group, a carboxyl group, a vinyl group, an isocyanate group, an isocyanurate group, and a halogen, more specifically, isocyanate group-containing silanes such as γ-isocyanatopropyltrimethoxysilane, γ-isocyanatopropyltriethoxysilane, γ-isocyanatopropylmethyldiethoxysilane, and γ-isocyanatopropylmethyldimethoxysilane; amino group-containing silanes such as γ-aminopropyltrimethoxysilane, γ-aminopropyltriethoxysilane, γ-aminopropyltriisopropoxysilane, γ-aminopropylmethyldimethoxysilane, γ-aminopropylmethyldiethoxysilane, γ-(2-aminoethyl)-aminopropyltrimethoxysilane, γ-(2-aminoethyl)-aminopropylmethyldimethoxysilane, γ-(2-aminoethyl)-aminopropyltriethoxysilane, γ-(2-aminoethyl)-aminopropylmethyldiethoxysilane, γ-(2-aminoethyl)-aminopropyltriisopropoxysilane, γ-ureidopropyltrimethoxysilane, N-phenyl-γ-aminopropyltrimethoxysilane, N-benzyl-γ-aminopropyltrimethoxysilane, and N-vinylbenzyl-γ-aminopropyltriethoxysilane; mercapto group-containing silanes such as γ-mercaptopropyltrimethoxysilane, γ-mercaptopropyltriethoxysilane, γ-mercaptopropylmethyldimethoxysilane, and γ-mercaptopropylmethyldiethoxysilane; epoxy group-containing silanes such as γ-glycidoxypropyltrimethoxysilane, γ-glycidoxypropyltriethoxysilane, γ-glycidoxypropylmethyldimethoxysilane, β-(3,4-epoxycyclohexyl)ethyltrimethoxysilane, and β-(3,4-epoxycyclohexyl)ethyltriethoxysilane; carboxysilanes such as β-carboxyethyltriethoxysilane, β-carboxyethylphenyl-bis(2-methoxyethoxy)silane, and N-β-(carboxymethyl)-aminoethyl-γ-aminopropyltrimethoxysilane; vinylically unsaturated group-containing silanes such as vinyltrimethoxysilane, vinyltriethoxysilane, γ-methacryloyloxypropylmethyldimethoxysilane, and γ-acroyloxypropylmethyltriethoxysilane; halogen-containing silanes such as γ-chloropropyltrimethoxysilane; and isocyanurate silanes such as tris(trimethoxysilyl) isocyanurate. Other examples of the silane coupling agent include derivatives obtained by modifying the above compounds, such as amino-modified silyl polymers, silylated amino polymers, unsaturated aminosilane complexes, phenylamino-long-chain-alkylsilanes, aminosilylated silicones, blocked isocyanate silanes, and silylated polyesters.

The amount of the silane coupling agent used is preferably 0.1 to 20% by weight, and more preferably 0.5 to 10% by weight, based on 100% by weight of the active energy ray-curable composition.

Specific examples of the adhesion promoter other than silane coupling agents include, but not limited to, epoxy resins, phenol resins, sulfur, alkyl titanates, and aromatic polyisocyanates.
Each of these adhesion promoters may be used alone, or two or more of these may be used in admixture.

### <Solvent>

The active energy ray-curable composition of the present invention can be formed directly into a thin layer such as a film. Alternatively, the composition may be dissolved in an organic solvent into a varnish. The solvent to be used is not particularly limited, and specific suitable examples thereof include: hydrocarbon solvents such as benzene, toluene, hexane, and heptane; ether solvents such as tetrahydrofuran, 1,4-dioxane, and diethyl ether; ketone solvents such as acetone and methyl ethyl ketone; ester solvents such as propylene glycol monomethyl ether acetate and ethylene glycol monomethyl ether acetate; and halogen solvents such as chloroform, methylene chloride, and 1,2-dichloroethane. The solvent may be a mixed solvent containing two or more solvents. The solvent is preferably toluene, tetrahydrofuran, or propylene glycol monomethyl ether acetate.

The amount of the solvent used is preferably in the range of 0.1 to 10 mL per gram of the active energy ray-curable composition. If the amount is too small, the effect of lowering the viscosity, for example, is less likely to be achieved. Conversely, if the amount is too large, the solvent may be left in the cured product, resulting in problems such as separation and coloring.

### <Inorganic filler>

The active energy ray-curable composition of the present invention may optionally contain an inorganic filler. The addition of an inorganic filler has an effect in preventing flowing of the composition and in enhancing the strength of the material. The inorganic filler is preferably in the form of fine particles that would not deteriorate the optical properties, and examples thereof include alumina, aluminum hydroxide, fused silica, crystalline silica, ultrafine amorphous silica, ultrafine hydrophobic silica, talc, and barium sulfate.

The active energy ray-curable composition of the present invention may contain various additives for improving LED properties. Examples of the additives include phosphors which absorb light from a light emitting element and emit a longer wavelength fluorescent light, such as yttrium-aluminum-garnet phosphors; colorants which absorb light of a specific wavelength, such as blueing agents; various inorganic or organic diffusing agents for diffusing light, such as titanium oxide, aluminum oxide, silicon oxides such as silica and fused silica glass, talc, calcium carbonate, melamine resin, CTU guanamine resin, and benzoguanamine resin; heat conductive fillers such as metal oxides (e.g., glass, alminosilicate) and metal nitrides (e.g., aluminum nitride, boron nitride). The additives for improving the properties of a light emitting diode may each be incorporated uniformly or incorporated to form a concentration gradient.

### «Method for preparing curable composition»

The method for preparing the active energy ray-curable composition of the present invention is not particularly limited. The composition may be prepared as a one-pack formulation containing all the formulation components together. Alternatively, the composition may be prepared as a two-pack formulation in which the formulation components are separated and mixed into some components in consideration of the storage stability and other properties of the composition, and then they are mixed before use.

In the case of the one-pack formulation, extra operations of mixing and kneading the components before application are not needed, which in turn avoids any measurement error (error in the mixing ratio) that may occur during the operations. Therefore, errors such as insufficient cure are avoided.
In the case of the two-pack formulation, the formulation components may be separated into any two fluids and then they are mixed before use. For separation into A fluid and B fluid, various combinations of these fluids can be contemplated in consideration of the mixing ratio, storage stability, the mixing method, pot life and other factors associated with the curable composition.
Further, a third component may optionally be prepared in addition to the A fluid and B fluid, so that the composition can be prepared as a three-pack curable composition. If needed, the formulation components may be separated into more components.

The method for mixing the active energy ray-curable composition of the present invention is not particularly limited and may be a conventional method such as a method of adding and mixing the aforementioned components, optionally under shading, using a hand-mixer or static mixer, a method of kneading the components with a planetary mixer, disperser, roll, kneader or the like at ambient temperatures or under heating, and a method of dissolving the components in a small amount of an appropriate solvent and mixing the solution.

The active energy ray-curable composition preferably has a viscosity at 23°C of 100 Pa·s or less, more preferably 30 Pa·s or less, still more preferably 10 Pa·s or less, and most preferably 5 Pa·s or less. If the viscosity exceeds 100 Pa·s, the productivity is lowered due to such high viscosity. Here, the viscosity can be measured using an E-type viscometer in conformity with the Cone and plate system of JIS K 7117-2.

### «Cured product»

The cured product for an optical material of the present invention is obtained by curing the active energy ray-curable composition.

### <Curing method>

The curing method is not particularly limited, and curing can be carried out by irradiation with light or an electron beam from an active energy ray source. The active energy ray source is not particularly limited, and may be a high-pressure mercury lamp, a low-pressure mercury lamp, an electron beam processing system, a halogen lamp, a light emitting diode, a semiconductor laser, a metal halide or the like, according to the nature of the photo-radical initiator to be used.

The light intensity is preferably 50 to 1500 mW/cm², more preferably 100 to 1000 mW/cm², and still more preferably 200 to 800 mW/cm². If the light intensity is less than 50 mW/cm², the curing time becomes longer and the productivity becomes poor since the light dose is small. Conversely, if the light intensity exceeds 1500 mW/cm², the composition may not be cured beautifully and the base material may be damaged.

The light dose is preferably 100 to 10000 mJ/cm², more preferably 300 to 6000 mJ/cm², and still more preferably 500 to 3000 mJ/cm². If the light dose is less than 100 mJ/cm², the uncured components increase to adversely affect the physical properties. Conversely, if the light dose exceeds 10000 mJ/cm², the energy cost becomes higher and the productivity becomes poor.

The light intensity and the light dose can be measured using a UV actinometer. Examples thereof include UIT-150 manufactured by USHIO INC., and those including a photo-sensor having a peak sensitivity wavelength of 365 nm may be used.

The curing temperature is typically preferably 100°C or lower, more preferably 80°C or lower, and still more preferably 50°C or lower. In the case of curing at a temperature higher than 100°C, a distortion becomes larger due to a difference of linear expansion between the cured product and the base material.

When the thermal radical initiator is used in combination as another initiator, the curing temperature is typically preferably 50 to 250°C, and more preferably 70 to 200°C, though it depends on the kind of the thermal radical initiator to be used and the like.

When the redox initiator is used, the curing temperature is preferably -50 to 250°C, and more preferably 0 to 180°C.

### <Physical properties>

From the standpoint of achieving good elongation properties, no warpage of the substrate, and improvement in crack resistance in a thermal shock test, the cured product preferably has a glass transition temperature of 0°C or lower, more preferably -10°C or lower, still more preferably -20°C or lower, and most preferably -40°C or lower. The glass transition temperature of the cured product is obtained based on the tanδ peak in a dynamic viscoelasticity measurement.

From the standpoint of achieving good elongation properties, no warpage of the substrate, and improvement in crack resistance in a thermal shock test, the cured product preferably has a storage elastic modulus (G') at 23°C of 10 MPa or less, more preferably 1 MPa or less, and still more preferably 0.2 MPa or less.

### «Molding method»

The molding method in the case of using the active energy ray-curable composition of the present invention as a molding material is not particularly limited, and various commonly used methods may be employed. Examples thereof include cast molding, compression molding, transfer molding, injection molding, extrusion molding, rotational molding, blow molding, and thermomolding. In particular, molding is preferably carried out by roll molding, calendar molding, extrusion molding, liquid injection molding, or injection molding because they allow automated and continuous production and are excellent in productivity.

### <<Applications>>

The active energy ray-curable composition and the cured product for an optical material according to the present invention can be suitably used for applications in which light such as UV rays, visible light rays, infrared rays, X-rays, and laser beams is to be passed through a material containing the composition.
Specific examples may be mentioned below: flat panel displays and encapsulants for the displays; those in the field of liquid crystal displays, such as light guide plates, prism sheets, polarizers, retardation plates, viewing angle compensation films, protective films for front glass, polarizer protective films, adhesives, adhesives between panels or films, fillers between panels or films, and peripheral materials for liquid crystal display devices such as liquid crystal films; those in the field of color PDPs (plasma display panels), i. e. , encapsulants, antireflection films, optical compensation films, protective films for front glass, adhesives, adhesives between panels or films, and fillers between panels or films; those in the field of light emitting diode display devices, i. e. , molding materials of light emitting elements, encapsulants for light emitting diodes (LEDs), protective films for front glass, adhesives, adhesives between panels or films, and fillers between panels or films; those in the field of plasma address liquid crystal (PALC) displays, i.e., light guide plates, prism sheets, polarizers, retardation plates, viewing angle compensation films, polarizer protective films, adhesives, adhesives between panels or films, and fillers between panels or films; those in the field of organic EL (electroluminescence) displays, i.e., protective films for front glass, adhesives, adhesives between panels or films, and fillers between panels or films; those in the field of organic TFT (organic thin film transistor) displays, i.e., protective films, adhesives, adhesives between panels or films, and fillers between panels or films; those in the field of field emission displays (FEDs), i.e., various film substrates, protective films for front glass, adhesives, adhesives between panels or films, and fillers between panels or films; those in the field of electronic paper, i.e., protective films, adhesives, adhesives between panels or films, and fillers between panels or films; those in the fields of touch panels, displays of mobile phones, and displays of car navigation systems, i.e., protective films, adhesives, adhesives between panels or films, and fillers between panels or films; and peripheral materials for the display devices.

In the field of optical recording, exemplary applications include disc substrate materials, pickup lenses, protective films, encapsulants, and adhesives for VDs (video discs), CDs, CD-ROMs, CD-Rs, CD-RWs, DVDs, DVD-ROMs, DVD-Rs, DVD-RWs, BDs, BD-ROMs, BD-Rs, BD-REs, MOs, MDs, PDs (phase change discs), holograms, and optical cards.

In the field of optical instruments, exemplary applications include: lens materials, finder prisms, target prisms, finder covers, photo-sensors of still cameras; taking lenses and finders of video cameras; projector lenses, protective films, encapsulants, and adhesives of projection televisions; and lens materials, encapsulants, adhesives, and films of optical sensing devices.

In the field of optical components, exemplary applications include those in optical communication systems, such as: fiber materials, lenses, waveguides, encapsulants for elements, adhesives and others used around optical switches; optical fiber materials, ferrules, encapsulants, adhesives and others used around optical connectors. Other exemplary applications include: lenses, waveguides, encapsulants for light emitting elements, adhesives and others used in passive optical components and optical circuit components; and substrate materials, encapsulants for fiber material elements, adhesives and others used around optoelectronic integrated circuits (OEICs).

In the field of optical fibers, exemplary applications include: lighting and light guides for decoration displays; sensors, displays and signs for industrial purposes; and optical fibers for communication infrastructure and for connecting digital devices for domestic use.

Specific examples of peripheral materials for semiconductor integrated circuits include resist materials used in microlithography of LSI and super LSI materials.

Exemplary applications in the LED-related field include encapsulants for LEDs, and encapsulants for reflectors and/or heat-dissipating substrates on which LEDs are arranged.

Exemplary applications in the solar cell-related field include encapsulants for elements, protective films for front glass, and adhesives.

The active energy ray-curable composition and the cured product for an optical material according to the present invention can be used for applications other than the above-mentioned applications. Examples thereof include: architectural and industrial sealants such as architectural elastic sealants, sealants for siding boards, sealants for double-glazed glass, sealants for vehicles; electric and electronic component materials such as solar cell back sealants; electric insulating materials such as insulating covering materials for electric wires and cables; pressure-sensitive adhesives, adhesives, elastic adhesives, contact adhesives, tile adhesives, reactive hot-melt adhesives, coating compositions, powder coating compositions, coating materials, expanded/foamed materials, sealing materials for can lids and the like, heat radiating sheets, potting agents for electrics and electronics, films, gaskets, marine deck caulking materials, casting materials, various molding materials, artificial marbles, rustproof and waterproof encapsulants for wired glass and laminated glass edges (cut end faces), vibration-proof/damping/soundproof/seismic isolation materials used for automobiles, ships, household appliances and the like, and liquid sealants and water-proofing agents used for automobile parts, electrical machinery parts, various machine parts and the like.

### <<Method for producing module>>

The active energy ray-curable composition of the present invention can be used in collective encapsulation to produce an LED module, solar cell module, or flat panel display module. For example, LED elements are arranged on a substrate and collectively encapsulated with the curable composition, followed by curing to form an LED module.

### EXAMPLES

The present invention is more specifically described referring to specific examples. The present invention is not limited to the examples.

In the following examples, "the number average molecular weight" and "the molecular weight distribution (ratio of weight average molecular weight to number average molecular weight)" were determined relative to polystyrene standards by gel permeation chromatography (GPC). Here, columns filled with a crosslinked polystyrene gel (Shodex GPC K-804 and K-802.5, products of SHOWA DENKO K.K.) were used as the GPC column and chloroform was used as the GPC solvent.
In the following examples, "the number of (meth) acryloyl groups introduced per molecule of the polymer" was determined based on ¹H-NMR analysis and the number average molecular weight obtained by GPC (¹H-NMR measurement was performed at 23°C using a Bruker ASX-400 spectrometer with a deuterochloroform solvent).

A model LH6 UV irradiation device with an H valve (manufactured by Fusion UV Systems Japan K.K.) was used. UV curing was carried out at 800 mW/cm² and 3000 mJ/cm², but in the measurement of depth curability in Table 2, it was carried out at 800 mW/cm² and 1000 mJ/cm².
The UV actinometer used was a UIT-150 including a photo-sensor having a peak sensitivity wavelength of 365 nm (manufactured by USHIO INC).
UV curing in nitrogen atmosphere was performed by putting a sample in a tightly sealable container provided with a fused silica glass lid, substituting the atmosphere inside the container with nitrogen to an oxygen concentration of 5000 ppm or less, and then carrying out UV curing as mentioned above. The oxygen concentration was determined with a commercially-available oxygen concentration meter placed in the container in advance.

### (Color difference ΔE*)

A spectrocolorimeter SE2000 manufactured by NIPPON DENSHOKU INDUSTRIES CO., LTD. and a white reflection standard (X: 93.06, Y: 94.91, Z: 112.52) were used. A quartz cell having a width of 10 mm was used as a reference test sample (control sample). A test sample was poured into the quartz cell so as not to cause air entrainment. Then the color difference ΔE* (ΔE*_{ab}) was determined by a penetration method.

### (Viscosity)

The viscosity of the resulting curable composition was measured at 23°C using an E-type viscometer manufactured by TOKI SANGYO CO., LTD. based on the Cone and plate system of JIS K 7117-2.

### (Depth curability)

The active energy ray-curable composition was poured into a polypropylene cup (diameter of 18 mm, height of 20 mm) to have a thickness of 20 mm. The side face of the cup was covered with aluminum foil and the composition was then cured by UV irradiation. The UV-cured product was cut and the thickness of the cross section was measured with a ruler. The measured value is indicative of depth curability.

### (Light transmittance)

On a white slide glass (model: S1111) manufactured by Matsunami Glass Ind., Ltd., a 1 mm-thick silicone sheet in which a 15 mm × 55 mm portion was cut out was attached. The active energy ray-curable composition was poured into the cutout portion and excess composition was removed using a spatula. Then the composition was cured by UV irradiation to give a cured product having a thickness of 1 mm. The light transmittance of the cured product was measured with an ultraviolet/visible spectrophotometer V-560 manufactured by JASCO Corporation at a scanning speed of 200 nm/min.

### (Heat resistance test)

The test sample for the light transmittance measurement was held in an oven at 200°C for 24 hours. Then the light transmittance thereof was measured.

### (Heat and light resistance test)

The test sample for the light transmittance measurement was subjected to irradiation using a metaling weather meter (model: M6T) manufactured by Suga Test Instruments Co., Ltd., at an inside temperature of 120°C for 26 hours at an irradiance of 0.53 kW/m² and an integrated irradiance of 50 MJ/m². Then the light transmittance thereof was measured.

### (Curability)

The active energy ray-curable composition was poured into a polypropylene cup (diameter of 18 mm, height of 20 mm) to have a thickness of 20 mm. The side face of the cup was covered with aluminum foil and the composition was then cured by UV irradiation. The UV-cured product was cut and the thickness of the cross section was measured with a ruler. The cured product having a thickness of 20 mm or more was considered to be good.

### (Appearance of cured product)

The active energy ray-curable composition was poured into a polypropylene tray (110 mm × 170 mm) to have a thickness of 2 mm and was then cured by UV irradiation to give a cured product having a thickness of 2 mm. The cured product having no warpage and no shrinkage was considered to be good.

### (Dynamic viscoelasticity, storage elastic modulus)

The active energy ray-curable composition was poured into a polypropylene tray (110 mm × 170 mm) to have a thickness of 2 mm and was then cured by UV irradiation to give a cured product having a thickness of 2 mm. A test sample (6 mm × 5 mm × 2 mm) was cut out from the cured product. The dynamic viscoelasticity and storage elastic modulus of the test sample were measured using a DVA-200 manufactured by IT Keisoku Seigyo K. K., in a shear mode at a measuring frequency of 0. 5 Hz, a strain of 0.05%, and a rate of temperature increase of 4°C/min. The tanδ peak temperature was determined as the glass transition temperature.

### (Mechanical properties)

The active energy ray-curable composition was poured into a polypropylene tray (110 mm × 170 mm) to have a thickness of 2 mm and was then cured by UV irradiation to give a cured product having a thickness of 2 mm. A sample in a size of a No. 3 dumbbell with a thickness of 2 mm was cut out from the cured product in conformity with JIS K 6251. The sample was subjected to measurement at a tensile rate of 200 mm/min and at 23°C × 55%RH. In the tensile test, an autograph AG-2000A manufactured by Shimadzu Corporation was used.

### (Synthesis Example 1)

### <Synthesis of poly(n-butyl acrylate) having acryloyl groups at both terminals>

Polymerization was carried out using cuprous bromide as catalyst, pentamethyldiethylenetriamine as ligand, diethyl 2,5-dibromoadipate as initiator, and n-butyl acrylate as monomer and at a ratio of (n-butyl acrylate)/(diethyl 2,5-dibromoadipate) of 80. Thus, a bromine group-terminated poly(n-butyl acrylate) was produced.
The resulting polymer was dissolved in N,N-dimethylacetamide, and potassium acrylate was added thereto. The mixture was stirred with heating in nitrogen atmosphere at 70°C. The N,N-dimethylacetamide was removed from the liquid mixture under reduced pressure, butyl acetate was added to the resulting residue, and then insoluble matter was removed by filtration. The butyl acetate was removed from the filtrate under reduced pressure. Thus, a poly(n-butyl acrylate) (polymer [P1]) having acryloyl groups at both terminals was obtained.
The polymer [P1] had a number average molecular weight of 12,000, a molecular weight distribution of 1.2, and an average number of terminal acryloyl groups of 1.8.
To 800 g of the polymer [P1], 4 g of aqueous hydrogen peroxide having a concentration of 50% was added. The mixture was stirred for about 10 minutes in the air. The resulting mixture was further stirred for one hour at 100°C in the air, and then stirred and devolatilized at 120°C for 1.5 hours, and water was removed under reduced pressure. Thus, a poly(n-butyl acrylate)(polymer [P2]) having acryloyl groups at both terminals was obtained.
The polymer [P2] had a number average molecular weight of 12,000, a molecular weight distribution of 1.2, and an average number of terminal acryloyl groups of 1.8.

### (Synthesis Example 2)

### <Synthesis of poly(n-butyl acrylate) having an acryloyl group at one terminal>

Polymerization was carried out using cuprous bromide as catalyst, pentamethyldiethylenetriamine as ligand, ethyl α-bromobutyrate as initiator, and n-butyl acrylate as monomer and at a ratio of (n-butyl acrylate)/(ethyl α-bromobutyrate) of 40. Thus, a bromine group-terminated poly(n-butyl acrylate) was produced.
The resulting polymer was dissolved in N,N-dimethylacetamide, and potassium acrylate was added thereto. The mixture was stirred with heating in nitrogen atmosphere at 70°C. The N,N-dimethylacetamide was removed from the liquid mixture under reduced pressure, butyl acetate was added to the resulting residue, and then insoluble matter was removed by filtration. The butyl acetate was removed from the filtrate under reduced pressure. Thus, a poly(n-butyl acrylate) having an acryloyl group at one terminal was obtained.
To 800 g of the resulting polymer, 4 g of aqueous hydrogen peroxide having a concentration of 50% was added. The mixture was stirred for about 10 minutes in the air. The resulting mixture was further stirred for one hour at 100°C in the air, and then stirred and devolatilized at 120°C for 1.5 hours, and water was removed under reduced pressure. Thus, a poly(n-butyl acrylate)(polymer [P3]) having an acryloyl group at one terminal was obtained.
The polymer [P3] had a number average molecular weight of 6, 500, a molecular weight distribution of 1.2, and an average number of terminal acryloyl groups of 0.9.
Table 1 shows the color differences ΔE* of the obtained polymers. It is demonstrated that heating treatment of the polymer using aqueous hydrogen peroxide clearly reduced coloring.

**[Table 1]**

| Polymer | ΔE* |
|---|---|
| P1 | 18.2 |
| P2 | 4.1 |
| P3 | 3.4 |

### (Examples 1 to 15, Comparative Examples 1 to 2)

The formulation method is described below. To the polymer(s) ([P1] to [P3]) as the component (A), the component (C) or another antioxidant was added, and then the antioxidant was dissolved in the polymer(s) ([P1] to [P3]) by mixing with heating at 120°C for two hours. To the solution cooled to 50°C or lower, a (meth)acrylate monomer as the component (D) and a photo-radical polymerization initiator as the component (B) were added, and the mixture was made homogeneous by an agitation/deaeration device (product of THINKY, ARE-250). When IRGACURE 819 (product of BASF) as the component (B) was used, the IRGACURE 819 was preliminarily dissolved in DAROCUR 1173 (product of BASF) with heating. The formulation amounts (expressed in parts by weight) are shown in Tables 2 and 3. In the tables, regarding the component (B), DAROCUR 1173 indicates 2-hydroxy-2-methyl-1-phenyl-propane-1-one, and IRGACURE 819 indicates bis(2,4,6-trimethylbenzoyl)-phenyl phosphine oxide; regarding the component (C), Sumilizer GA-80 indicates 3,9-bis{2-[3-(3-tert-butyl-4-hydroxy-5-methylphenyl)-propionyloxy]-1,1-dimethylethyl}-2,4,8,10-tetraoxaspiro[5,5]undecane, ADK STAB 1178 indicates tris(nonylphenyl) phosphite, ADK STAB LA-63P indicates a condensate of 1,2,3,4-butanetetracarboxylic acid, 1,2,2,6,6-pentamethyl-4-piperidinol, and β,β,β',β'-tetramethyl-3,9-(2,4,8,10-tetraoxaspiro[5,5]undecane) diethanol, and IRGANOX 1010 indicates tetrakis[methylene-3-(3,5-di-tert-butyl-4-hydroxyphenyl)-propionate]methane; and regarding another antioxidant, IRGANOX 1035 indicates thiodiethylene-bis[3-(3,5-di-tert-butyl-4-hydroxyphenyl)propionate].

**[Table 2]**

| Component | | Example 1 | Comparative Example 2 |
|---|---|---|---|
| (A) | P2 | 100 | |
| | P1 | | 100 |
| (C) | Sumilizer GA-80 | 1 | 1 |
| | ADK STAB 1178 | 1 | 1 |
| (B) | DAROCUR 1173 | 0.2 | 0.2 |
| | IRGACURE 819 | 0.1 | 0.1 |
| Viscosity (Pa·s, 230°C) | The day of the study | 55.3 | 54.7 |
| Depth curability (mm) | 800 mW/cm², 1000 mJ/cm² | 8.5 | 5.5 |
| Light transmittance (450 nm, %T) | Initial value | 100 | 99.6 |
| | Value after heat resistance test (200°C, 24 h) | 80.0 | 69.8 |
| | Value after heat and light resistance test | 93.1 | 92.8 |

The results show that, in the case of using the polymer [P2] obtained by purification using aqueous hydrogen peroxide to reduce coloring, the depth curability was clearly improved in comparison with that in the case without purification. In addition, the light transmittance was improved not only before the heat resistance test and heat and light resistance test but also after these tests. The viscosity of the composition was hardly changed, which seems to indicate that the treatment with aqueous hydrogen peroxide hardly affects the acryloyl group of the component (A).
The results in Table 2 demonstrated that, in the case of using the polymer [P2] obtained by purification using aqueous hydrogen peroxide to reduce coloring, the UV curability of the composition is improved and the resulting cured product has also an enhanced light transmittance.

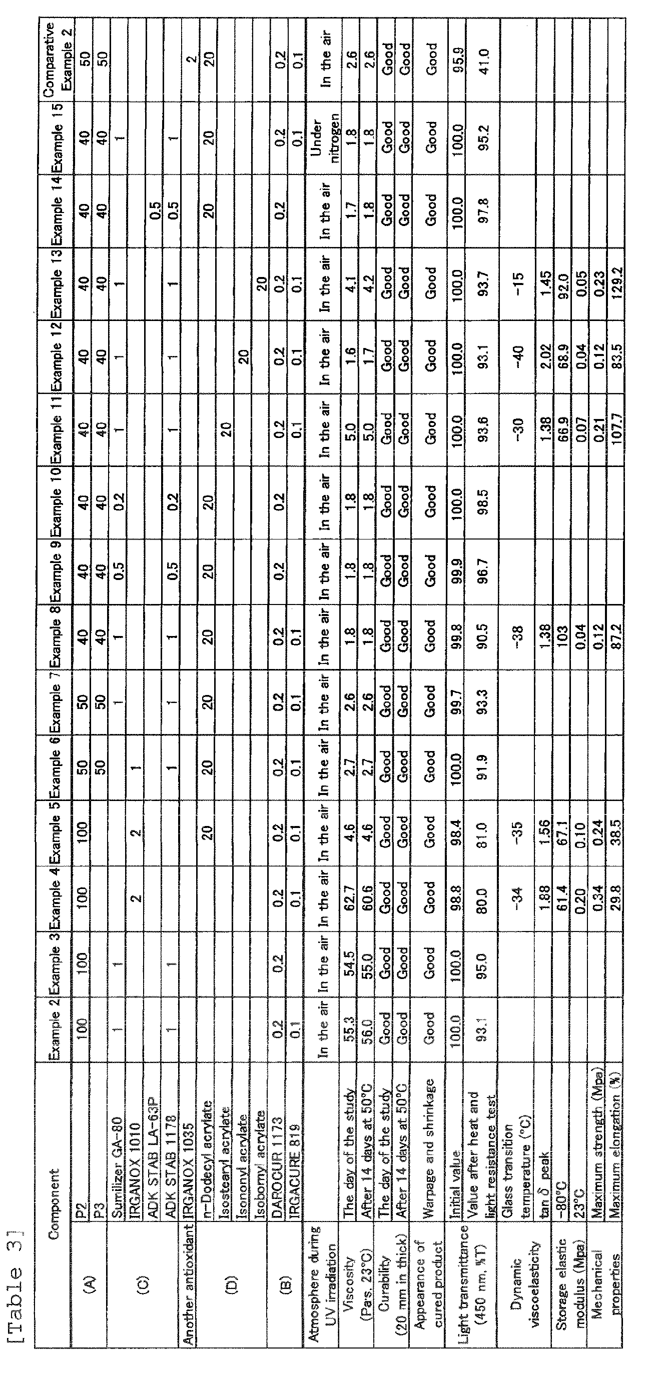

A portion of the active energy ray-curable composition was tightly sealed in a glass sample tube, and the viscosity and curability thereof were determined before and after storage at 50°C for 14 days. The results show that the viscosity and curability were hardly changed and were thus favorable. Moreover, the curable composition was poured into a polypropylene tray (110 mm × 170 mm) to have a thickness of 2 mm and was then cured by UV irradiation. The results show that the cured product did not have any warpage, shrinkage, and foaming. The curable composition of each Example after the heat and light resistance test favorably had a light transmittance of 80% or more. The resulting cured product had a glass transition temperature of -15 °C or lower, and a storage elastic modulus (G') at 23°C of 0.2 MPa or less, and also had good elongation properties, and therefore soft rubber properties. Accordingly, the cured product is considered to have good crack resistance.

The results in Table 3 demonstrated that the active energy ray-curable composition of the present invention has good storage stability, and a cured product of the composition has a low glass transition temperature and a low storage elastic modulus and also has soft rubber properties, as well as good heat-resistant and light-resistant transparency. In addition, the cured product has little warpage, shrinkage, and foaming.

### INDUSTRIAL APPLICABILITY

The active energy ray-curable composition and the cured product for an optical material according to the present invention are excellent in terms of low viscosity, storage stability, low foaming properties, low-temperature curing, less warpage, depth curability, heat-resistant and light-resistant transparency, rubber properties, crack resistance, resistance to moisture penetration, and designability. Accordingly, they can be suitably used in optical materials requiring these properties.

## Claims

1. An active energy ray-curable composition for an optical material, comprising:
(A) a vinyl polymer that has per molecule at least one (meth)acryloyl group represented by formula (1) below, is produced by living radical polymerization, and has a color difference ΔE* of 10 or less;
(B) a photo-radical polymerization initiator; and
(C) at least one antioxidant selected from the group consisting of hindered phenol antioxidants, hindered amine antioxidants, and phosphorus antioxidants,
the formula (1) being
-OC (O) C (R^{a}) =CH₂ (1)
wherein R^{a} represents a hydrogen atom or a C1-20 organic group.

2. The active energy ray-curable composition for an optical material according to Claim 1,
wherein the (meth) acryloyl group in the component (A) is present at a molecular terminal.

3. The active energy ray-curable composition for an optical material according to Claim 1 or 2,
wherein the vinyl polymer (A) mainly comprises a polymer of a (meth)acrylate monomer.

4. The active energy ray-curable composition for an optical material according to Claim 3,
wherein the vinyl polymer (A) mainly comprises a polymer of an acrylate monomer.

5. The active energy ray-curable composition for an optical material according to any one of Claims 1 to 4,
wherein the vinyl polymer (A) is produced by atom transfer radical polymerization.

6. The active energy ray-curable composition for an optical material according to any one of Claims 1 to 5,
wherein the vinyl polymer (A) has a number average molecular weight of 3,000 to 100,000.

7. The active energy ray-curable composition for an optical material according to any one of Claims 1 to 6,
wherein the vinyl polymer (A) has a ratio of weight average molecular weight to number average molecular weight, as determined by gel permeation chromatography, of less than 1.8.

8. The active energy ray-curable composition for an optical material according to any one of Claims 1 to 7, further comprising
(D) a (meth) acrylate monomer represented by the following formula (4):
R^{b}-OC(O)C(R^{a})=CH₂ (4)
wherein R^{a} represents a hydrogen atom or a C1-20 organic group, and R^{b} represents a C6-20 organic group.

9. The active energy ray-curable composition for an optical material according to Claim 8,
which comprises 0.001 to 10 parts by weight of the component (B) and 0.01 to 5 parts by weight of the component (C), each per 100 parts by weight in total of the component (A) and the component (D).

10. The active energy ray-curable composition for an optical material according to any one of Claims 1 to 9,
wherein the vinyl polymer (A) is treated with aqueous hydrogen peroxide.

11. The active energy ray-curable composition for an optical material according to any one of Claims 1 to 10,
wherein the antioxidant (C) is a combination of a hindered phenol antioxidant and a phosphorus antioxidant, a combination of a hindered amine antioxidant and a phosphorus antioxidant, or a combination of a hindered phenol antioxidant, a hindered amine antioxidant and a phosphorous antioxidant.

12. A cured product for an optical material,
which is formed from the active energy ray-curable composition for an optical material according to any one of Claims 1 to 11.

13. The cured product for an optical material according to Claim 12,
which has a glass transition temperature of 0°C or lower.

14. The cured product for an optical material according to Claim 12 or 13,
which has a storage elastic modulus at 23°C of 10 MPa or less.

15. The active energy ray-curable composition for an optical material according to any one of Claims 1 to 11,
which is for use in an encapsulant for LEDs, for solar cells, or for flat panel displays.

16. A method for producing an LED module, a solar cell module, or a flat panel display module, the method comprising a step of collective encapsulation with the active energy ray-curable composition for an optical material according to any one of Claims 1 to 11.
